# EUROPEAN PATENT APPLICATION

(11) **EP 4 582 610 A1**
(43) Date of publication of application: **09.07.2025**
(21) Application number: 23858521.0
(22) Date of filing: 17.01.2023
(51) Int. Cl.: D06F 25/00, D06F 58/20, D06F 58/24, D06F 58/26, D06F 58/04

(54) **CLOTHES TREATMENT APPARATUS AND CONTROL METHOD THEREFOR**

(30) Priority: 31.08.2022 CN 202211057592; 31.08.2022 WO PCT/CN2022/116242
(71) Applicant: Nanjing Roborock Innovation Technology Co., Ltd., Nanjing, Jiangsu 210039 (CN)
(72) Inventor: WANG, Wei, Shenzhen, Guangdong 518000 (CN); ZHAO, Changjian, Shenzhen, Guangdong 518000 (CN); FANG, Junjun, Shenzhen, Guangdong 518000 (CN); QUAN, Gang, Shenzhen, Guangdong 518000 (CN)
(74) Representative: Studio Torta S.p.A.
(86) International application number: PCT/CN2023/072661
(87) International publication number: WO 2024/045478

(57) **Abstract**

A control method for a clothes treatment apparatus. The clothes treatment apparatus comprises: a clothes accommodation device (1100) having a first airflow outlet; a housing having a moisture absorption space and a moisture removal space; a moisture absorption and moisture removal rotating disc (2201) in the housing; and a heating module (2500) configured to heat the moisture removal space and an airflow entering the moisture removal space. The first airflow outlet is in communication with the moisture absorption and moisture removal rotating disc (2201) by means of an air outlet pipeline (1300). The temperature and/or the humidity near the first airflow outlet are/is detected, when it is detected that the temperature change rate near the first airflow outlet is greater than a first temperature change rate threshold, and/or when it is detected that the humidity change rate near the first airflow outlet is less than a first humidity change rate threshold, the heating module (2500) is turned off.

## Description

### CROSS-REFERENCE TO RELATED APPLICATIONS

The present application claims priority to Chinese Patent Application No. 202211057592.1, filed on August 31, 2022, and Patent Application No. PCT/CN2022/116242, filed on August 31, 2022, the entire contents of which are incorporated herein by reference.

### TECHNICAL FIELD

The present application relates to the field of household appliance technologies, in particular to a laundry treatment device and a control method therefor.

### BACKGROUND

With the continuous improvement of manufacturing technologies, people's daily needs are increasing, and laundry treatment devices have entered thousands of households and become the most commonly used household appliance products. The laundry treatment devices are used for realizing various treatment processes of clothes (washing, rinsing, ironing, drying, etc.).

At present, when clothes are dried by some laundry treatment devices in prior art, an evaporator is used for heating and moisture adsorption of a moist airflow to obtain a high-temperature airflow, which then re-enters a laundry holding apparatus, so that the moisture in the clothes is evaporated. However, the overall temperature of the evaporator is consistent, and in the evaporation process of the moist airflow, the moisture adsorbing capacity of the evaporator for the moist airflow decreases, leading to low moisture adsorbing efficiency, long drying time, high power consumption and difficulty in temperature control in a drying process.

### SUMMARY

An objective of the present application is to provide a laundry treatment device and a control method therefor, which can overcome the defects of low moisture adsorbing efficiency, long drying time, high power consumption and difficulty in temperature control in a drying process in the prior art.

The present application provides a method for controlling a laundry treatment device, and the laundry treatment device at least includes: a laundry holding apparatus and a drying apparatus.

The drying apparatus includes:
a moisture adsorption and desorption rotary disk;
a shell accommodating the moisture adsorption and desorption rotary disk; an internal space of the shell being at least divided into a moisture adsorption space and a moisture desorption space; and
a heater covering at least part of the moisture desorption space and used for heating the moisture desorption space or at least part of the moisture adsorption and desorption rotary disk located in the moisture desorption space.

The laundry holding apparatus at least has a first airflow inlet and a first airflow outlet, the first airflow inlet being communicated with the drying apparatus through an air inlet duct, and the first airflow outlet being communicated with the drying apparatus through an air outlet duct.

A running process of the laundry treatment device includes a drying operation.

When the heater in the drying apparatus is in operation, detecting a temperature and/or humidity near the first airflow outlet; and
when a temperature change rate near the first airflow outlet is greater than a first threshold for the temperature change rate, and/or when a humidity change rate near the first airflow outlet is less than a first threshold for the humidity change rate, turning off the heater in the drying apparatus.

Further, the drying apparatus further includes a driving part for the moisture adsorption and desorption rotary disk, and keeping the driving part for the driving part for the moisture adsorption and desorption rotary disk running for a first time period after the heater in the drying apparatus is turned off.

Further, the drying apparatus further includes at least a circulating fan and a regenerating fan, and the circulating fan is used for forming a circulating airflow passing through the laundry holding apparatus and the moisture adsorption space, and the regenerating fan is used for forming a regenerating airflow passing through the moisture desorption space; and
keeping running of the circulating fan, and keeping running of the regenerating fan at a higher power when a heating and drying stage is completed.

Further, the temperature change rate = (a currently collected temperature - a previously collected temperature) / a time difference between two temperature collections; and
the humidity change rate = (a currently collected humidity - a previously collected humidity) / a time difference between two humidity collections.

Further, when a temperature near the first airflow outlet is greater than or equal to a first abnormal temperature value, sending an alarm signal indicating an abnormality of the drying operation.

Further, the laundry treatment device further includes a condenser configured to condense an airflow flowing out of the moisture desorption space;
the condenser has a second air inlet and a second air outlet, and the airflow flowing out of the moisture desorption space enters the condenser through the second air inlet and enters the heater through the second air outlet after being condensed by the condenser; and
the drying operation further includes:
detecting a temperature near the second air inlet, and when the temperature near the second air inlet reaches a first temperature threshold, turning off the heater in the drying apparatus; and
when the temperature near the second air inlet is greater than or equal to a second abnormal temperature value, sending an alarm signal indicating an abnormality of the drying operation.

Further, the drying operation further includes:
detecting a temperature near the second air outlet, and when the temperature near the second air outlet reaches a second temperature threshold, turning off the heater in the drying apparatus; and
when the temperature near the second air outlet is greater than or equal to a third abnormal temperature value, sending the alarm signal indicating the abnormality of the drying operation.

Further, during the drying operation:
when a temperature near the first airflow inlet is less than a preset minimum temperature near the first airflow inlet, increasing a running power of the heater; and
when the temperature near the first airflow inlet is greater than or equal to a preset maximum temperature near the first airflow inlet, reducing the running power of the heater.

Further, a heating and drying stage of the drying operation includes:
controlling the heater to run within a preset heating power range in a fluctuating manner, so as to control a temperature near the first airflow inlet to be within a preset temperature range.

Further, the preset heating power is a power between a first preset heating power and a second preset heating power, and the heater runs in a form of square waves between the first preset heating power and the second preset heating power in a fluctuating manner.

Further, the first preset heating power is between 400W and 800W, and the second preset heating power is between 1200W and 1600W.

Further, the control method of a laundry treatment device further includes:
controlling the heater to stop heating;
controlling to increase a power of the circulating fan and/or controlling to increase power of the regenerating fan; and
when a temperature of the first airflow inlet is less than a fourth temperature threshold, and/or when a temperature near the first airflow outlet is less than a fifth temperature threshold, controlling the circulating fan and/or the regenerating fan to stop running.

Further, the fourth temperature threshold is between 50°C and 65°C.

The present application provides a control method of a laundry treatment device, and the laundry treatment device includes: a laundry holding apparatus and a drying apparatus;
the drying apparatus includes:
a moisture adsorption and desorption rotary disk;
a shell accommodating the moisture adsorption and desorption rotary disk; an internal space of the shell being at least divided into a moisture adsorption space and a moisture desorption space; and
a heater covering at least part of the moisture desorption space and used for heating the moisture desorption space or at least part of the moisture adsorption and desorption rotary disk located in the moisture desorption space.

A running process of the laundry treatment device includes a dehydration stage;
the dehydration stage at least includes first dehydration.
obtaining a weight of clothes in the laundry holding apparatus after the first dehydration;
determining whether the weight is less than a preset weight threshold;
if the weight is greater than or equal to the preset weight threshold, performing second dehydration, and turning on the heater before the second dehydration;
if the weight is less than the preset weight threshold, preventing performing of the second dehydration.

Further, the laundry holding apparatus is a rotary drum, and the rotary drum includes an inner drum and an outer drum;
a running stage of the laundry holding apparatus in the first dehydration and/or the second dehydration at least includes a stage of running at a first operation power and a stage of running at a second operation power, and the first operation power and the second operation power are driving powers of the inner drum; and the first operation power is less than the second operation power.

If the second dehydration is not performed, controlling the heater to run at a first heating power after the stage of running at the second operation power of the first dehydration is completed.

Further, if the second dehydration is performed, after the stage of running at the second operation power of the first dehydration is completed, controlling the heater run at a second heating power, and the second heating power is less than or equal to the first heating power.

Further, the laundry holding apparatus has a first airflow outlet, and the first airflow outlet is communicated with the drying apparatus through an air outlet duct.

When a temperature in the laundry holding apparatus or a temperature near the first airflow outlet reaches a sixth temperature threshold, controlling the heater to run at a reduced third heating power, and controlling a control motor of the laundry holding apparatus to run at the second operation power, the third heating power being less than the second heating power.

Further, after the second operation power running stage of the second dehydration is completed, the heater is controlled to run at fourth heating power; and the fourth heating power is greater than the third heating power.

Further, the first heating power and the fourth heating power are equal to maximum heating power of the heater.

Further, the drying apparatus also includes:
a driving part for the moisture adsorption and desorption rotary disk for driving the moisture adsorption and desorption rotary disk to rotate; and
a regenerating fan for forming a regenerating airflow passing through the moisture desorption space;
before the heater runs, the regenerating fan and/or the driving part for the moisture adsorption and desorption rotary disk are at least controlled to be turned on; or
before the power of the heater reaches first threshold power, the regenerating fan and/or the driving part for the moisture adsorption and desorption rotary disk are controlled to be started; or
before the heater is turned on for a first time, the regenerating fan and/or the driving part for the moisture adsorption and desorption rotary disk are controlled to be started.

Further, before a rotary disk temperature of the moisture adsorption and desorption rotary disk reaches a third temperature threshold, the regenerating fan and/or the driving part for the moisture adsorption and desorption rotary disk are controlled to be started.

Further, the first time is less than or equal to the time for the heating power to reach the first threshold power.

The present application provides a control method of a laundry treatment device, and the laundry treatment device includes a laundry holding apparatus and a drying apparatus;
the laundry holding apparatus has a first airflow inlet and a first airflow outlet, the first airflow inlet is communicated with the drying apparatus through an air inlet duct, and the first airflow outlet is communicated with the drying apparatus through an air outlet duct;
the drying apparatus includes:
a moisture adsorption and desorption rotary disk;
a shell accommodating the moisture adsorption and desorption rotary disk; an internal space of the shell being at least divided into a moisture adsorption space and a moisture desorption space;
a driving part for the moisture adsorption and desorption rotary disk for driving the moisture adsorption and desorption rotary disk to rotate around a rotary shaft in the shell;
a heater covering at least part of the moisture desorption space and used for heating the moisture desorption space or at least part of the moisture adsorption and desorption rotary disk located in the moisture desorption space;
a circulating fan for forming a circulating airflow passing through the laundry holding apparatus and the moisture adsorption space; and
a regenerating fan for forming a regenerating airflow passing through the moisture desorption space.

Further, controlling the laundry treatment device to dry the clothes therein includes:
S1: controlling the heater of the drying apparatus to stop heating, so that the circulating fan and/or the regenerating fan and/or the driving part for the moisture adsorption and desorption rotary disk do/does not stop running;
S2: detecting a temperature near the first airflow inlet and/or a temperature near the first airflow outlet;
S3: when the temperature near the first airflow inlet is less than a fourth temperature threshold, and/or the temperature near the first airflow outlet is less than a fifth temperature threshold, controlling the circulating fan, the regenerating fan and the driving part for the moisture adsorption and desorption rotary disk to stop running.

Further, in step S1, circulating power of the circulating fan is increased, and/or regenerating power of the regenerating fan is increased.

Further, in step S1, a rotary speed of the circulating fan is increased, and/or a rotary speed of the regenerating fan is increased.

Further, in step S3, the fourth temperature threshold is between 50 and 65°C.

Further, before step S1, the method further includes:
when the heater in the drying apparatus is in operation, detecting the temperature and/or a humidity near the first airflow outlet; and
when a temperature change rate near the first airflow outlet is greater than a first threshold of temperature change rate, and/or when a humidity change rate near the first airflow outlet is less than a first threshold of humidity change rate, turning off the heater in the drying apparatus.

Further, before step S1, the method further includes:
at least in one stage of a working process of the laundry treatment device, the heater runs within a preset heating power range in a fluctuating manner.

Further, before step S1, the method further includes:
at least in one stage of the working process of the laundry treatment device, when the temperature near the first airflow inlet is less than a preset minimum temperature near the first airflow inlet, increasing running power of the heater; and
when the temperature near the first airflow inlet is greater than or equal to a preset maximum temperature near the first airflow inlet, reducing the running power of the heater.

Further, the drying apparatus also includes a condenser arranged downstream of the moisture desorption space and used for condensing an airflow flowing out of the moisture desorption space, the condenser being implemented as a water-cooling condenser; and
at least in one stage of the working process of the laundry treatment device, a water flow rate of the condenser is between 0.2 and 0.4L/min, preferably 0.35L/min.

The present application provides a control method of a laundry treatment device, and the laundry treatment device includes a laundry holding apparatus and a drying apparatus;
the drying apparatus includes:
a moisture adsorption and desorption rotary disk rotating under the action of a driving part for the moisture adsorption and desorption rotary disk;
a shell accommodating the moisture adsorption and desorption rotary disk; an internal space of the shell being at least divided into a moisture adsorption space and a moisture desorption space;
a heater covering at least part of the moisture desorption space and used for heating the moisture desorption space or at least part of the moisture adsorption and desorption rotary disk located in the moisture desorption space;
a regenerating fan at least for forming a regenerating airflow passing through the moisture desorption space; and
a circulating fan at least for generating a circulating airflow in the laundry holding apparatus and the moisture adsorption space;
the control method includes:
   before the heater runs, at least controlling the regenerating fan and/or the driving part for the moisture adsorption and desorption rotary disk to be turned on; or
   before power of the heater reaches first threshold power, or before the heater is turned on for a first preset time, or before a temperature of the moisture desorption space reaches a first preset temperature, controlling the regenerating fan and/or the driving part for the moisture adsorption and desorption rotary disk to be started.

Further, the control method further includes:
before the heater runs, controlling the circulating fan to be turned on; or
before the power of the heater reaches the first threshold power, or before the heater is turned on for the first preset time, or before the temperature of the moisture desorption space reaches the first preset temperature, controlling the circulating fan to be started.

Further, running of the laundry treatment device includes a drying operation;
the drying operation at least includes a preheating stage; running of the preheating stage at least includes:
S10, turning on the driving part for the moisture adsorption and desorption rotary disk to drive the moisture adsorption and desorption rotary disk to rotate at a first rotary speed;
S11, turning on the heater to heat the moisture adsorption and desorption rotary disk or the moisture desorption space; and
S12, before a power of the heater reaches a first threshold power, or before the heater is turned on for a first time, or before a temperature of the moisture desorption space reaches a third temperature threshold, controlling the regenerating fan to be turned on.

Further, the running of the laundry treatment device includes the drying operation;
the drying operation includes:
S20, turning on the regenerating fan;
S21, turning on the heater to heat the moisture adsorption and desorption rotary disk or the moisture desorption space; and
S22, before the power of the heater reaches the first threshold power, or before the heater is turned on for the first time, or before the temperature of the moisture desorption space reaches the third temperature threshold, controlling the moisture adsorption and desorption rotary disk to be turned on.

Further, the running of the laundry treatment device includes the drying operation;
the drying operation includes:
S30, turning on the heater to heat the moisture adsorption and desorption rotary disk; and
S31: before the power of the heater reaches the first threshold power, or before the heater is turned on for the first time, or before the temperature of the moisture desorption space reaches the third temperature threshold, controlling the driving part for the moisture adsorption and desorption rotary disk to drive the moisture adsorption and desorption rotary disk to rotate, and controlling the regenerating fan to be turned on.

Further, the third temperature threshold is less than or equal to 180°C.

Further, the first threshold power is less than or equal to lower power at which the heater works normally.

Further, the first preset time is less than or equal to the time for the heating power to reach first heating power.

Further, the drying operation at least includes one of a preheating stage, a heating and drying stage and a cooling stage;
in the preheating stage, the driving part for the moisture adsorption and desorption rotary disk drives the moisture adsorption and desorption rotary disk to rotate at the first rotary speed;
in the heating and drying stage, the driving part for the moisture adsorption and desorption rotary disk drives the moisture adsorption and desorption rotary disk to rotate at a second rotary speed; and
in the cooling stage, the driving part for the moisture adsorption and desorption rotary disk drives the moisture adsorption and desorption rotary disk to rotate at a third rotary speed.

Further, the first rotary speed, the second rotary speed and the third rotary speed are all equal; or both the first rotary speed and the third rotary speed are greater than the second rotary speed.

The present application provides a control method of a laundry treatment device, and the laundry treatment device at least includes a laundry holding apparatus, a drying apparatus and a control module;
the drying apparatus includes:
a moisture adsorption and desorption rotary disk rotating under the action of a driving part for the moisture adsorption and desorption rotary disk;
a shell accommodating the moisture adsorption and desorption rotary disk; an internal space of the shell being at least divided into a moisture adsorption space and a moisture desorption space;
a heater covering at least part of the moisture desorption space and used for heating the moisture desorption space or at least part of the moisture adsorption and desorption rotary disk located in the moisture desorption space; the heater being electrically connected to the control module;
a drum inlet duct communicating an air outlet arranged on the shell and an air inlet of the laundry holding apparatus; and
a first temperature detecting unit arranged on the drum inlet duct and close to the air inlet, and used for detecting the temperature of an airflow entering the laundry holding apparatus and transmitting the detected temperature to the control module;
a running process of the laundry treatment device at least includes a drying operation, and in the drying operation, the heater runs within a preset heating power range; and
the control module adjusts running power of the heater according to data of the first temperature detecting unit.

Further, the running process of the laundry treatment device also includes a preheating stage and a cooling stage.

Further, adjusting, by the control module, the running power of the heater according to the data of the first temperature detecting unit includes:
when the first temperature detecting unit detects that the temperature of the airflow entering the laundry holding apparatus is less than a minimum value of the drum inlet temperature, controlling, by the control module, to increase the running power of the heater; and
when the first temperature detecting unit detects that the temperature of the airflow entering the laundry holding apparatus is greater than a maximum value of the drum inlet temperature, controlling, by the control module, to reduce the running power of the heater.

Further, the minimum value of the drum inlet temperature is between 60°C and 70°C, preferably 65°C; and the maximum value of the drum inlet temperature is between 75°C and 80°C, preferably 78°C.

Further, the drying apparatus also includes a regenerating fan and a circulating fan, the regenerating fan forms a regenerating airflow in the moisture desorption space, and the circulating fan forms a circulating airflow between the moisture adsorption space and the laundry holding apparatus; and
the regenerating fan and the circulating fan run at constant power in the drying operation.

The present application provides a control method of a laundry treatment device, and the laundry treatment device includes a laundry holding apparatus and a drying apparatus;
the drying apparatus includes:
a moisture adsorption and desorption rotary disk rotating under the action of a driving part for the moisture adsorption and desorption rotary disk;
a shell accommodating the moisture adsorption and desorption rotary disk; an internal space of the shell being at least divided into a moisture adsorption space and a moisture desorption space; and
a heater covering at least part of the moisture desorption space and used for heating the moisture desorption space and the airflow entering the moisture desorption space;
running of the laundry treatment device includes a drying operation; the drying operation at least includes one of a preheating stage, a heating and drying stage and a cooling stage;
in the preheating stage, the heater is turned on to run;
in the heating and drying stage, the heater runs within a preset heating power range in a fluctuating manner; heating power of the heater in the preheating stage is less than or equal to a maximum power value in the preset heating power range; and
in the cooling stage, the heater stops running.

The present application provides a laundry treatment device, including: a laundry holding apparatus and a drying apparatus;
the drying apparatus includes:
a moisture adsorption and desorption rotary disk;
a shell accommodating the moisture adsorption and desorption rotary disk; an internal space of the shell being at least divided into a moisture adsorption space and a moisture desorption space;
a driving part for the moisture adsorption and desorption rotary disk for driving the moisture adsorption and desorption rotary disk to rotate around a rotary shaft in the shell;
a circulating fan for forming a circulating airflow passing between the laundry holding apparatus and the moisture adsorption space;
a regenerating fan for forming a regenerating airflow passing through the moisture desorption space;
a heater covering at least part of the moisture desorption space and used for heating the moisture desorption space or at least part of the moisture adsorption and desorption rotary disk entering the moisture desorption space;
a condenser arranged downstream of the moisture desorption space and used for condensing an airflow flowing out of the moisture desorption space; and
a memory and a processor, wherein the circulating fan, the regenerating fan, the moisture adsorption and desorption rotary disk, the heater, the condenser, the memory and the processor are in communication connections with each other, computer instructions are stored in the memory, and the processor executes any one of the above control methods of a laundry treatment device by executing the computer instructions.

The present application provides a computer-readable storage medium, having an application program stored thereon, and the application program, when executed by a processor, implements any one of the above control methods of a laundry treatment device.

### BRIEF DESCRIPTION OF DRAWINGS

To more clearly describe the specific embodiments of the present application or the technical solutions in the prior art, the following will briefly introduce the accompanying drawings required for describing the specific embodiments or the prior art. Apparently, the accompanying drawings in the following descriptions show merely some embodiments of the present application, and those ordinary skilled in the art may further derive other drawings from these drawings without creative efforts.
Figs. 1-3 respectively show a perspective view, a rear view and a top view of a washer-dryer machine according to some embodiments of the present disclosure;
Figs. 4 and 5 respectively show a top view and a perspective view of a drying apparatus in Figs. 2-3;
Fig. 6 shows a structural diagram of a lower shell of a drying apparatus;
Fig. 7 shows a schematic diagram of a flow direction of a circulating airflow;
Fig. 8 shows a schematic diagram of a flow direction of a moisture desorption airflow;
Fig. 9 shows a schematic diagram of a fixing mode of a condenser of a condenser and a lower shell;
Fig. 10 shows a sectional view of a condenser shell of a condenser; and
Fig. 11 is a schematic diagram of a working state of some structural members in a drying operation in an embodiment of the present application.

Reference numerals:
washer-dryer machine 1000; laundry holding apparatus 1100; door body 1110; housing 1200; air outlet duct 1300; connector 1400;
drying apparatus 2000: circulating fan 2100; moisture adsorption and removal member 2200; moisture adsorption and desorption rotary disk 2201; driving part 2300 for the moisture adsorption and desorption rotary disk; regenerating fan 2400; heater 2500; condenser 2600; water inlet 2610; water outlet 2620; second air outlet 2631; baffle 2632; second air inlet 2633; condensate water pipe 2640;
lower shell 2700 of drying apparatus; fourth mounting part 2701; mounting part 2710 for mounting circulating fan; mounting part 2720 (i.e., first mounting part) for mounting moisture adsorption and removal member; first separator 2725; first separating rib 2725-1 for lower shell; second separating rib 2725-2 for lower shell; third separator 2726; mounting part 2730 for mounting regenerating fan; mounting part 2740 for mounting condenser; fifth mounting part 2801; upper shell 2810 of circulating fan; upper shell 2820 of moisture adsorption and removal member; upper shell 2830 of condenser; first air outlet 2902; first air inlet 2901; flexible pipe 2903; moisture adsorbing region 2907; first moisture adsorbing region 2907-1; second moisture adsorbing region 2907-2; regenerating region 2908; first connector 2909; second connector 2910; sealing strip 2920.

### DETAILED DESCRIPTION

In the following, the technical solutions in the embodiments of the present application will be clearly and completely described in combination with the accompanying drawings in the embodiments of the present application. Obviously, the described embodiments are only part but not all of the embodiments of the present application. The assemblies of the embodiments of the present application, which are generally described and illustrated in the drawings herein, may be arranged and designed in various configurations. Therefore, the following detailed description of the embodiments of the present application provided in the drawings is not intended to limit the claimed scope of the present application, but only represents selected embodiments of the present application, and features included in different embodiments may be combined with each other. Based on the embodiments of the present application, all other embodiments (including new embodiments formed by mutual combination of features included in different embodiments) obtained by those skilled in the art without creative work belong to the scope of protection of the present application.

It should be noted that similar numerals and letters indicate similar items in the following drawings. Therefore, once defined in one drawing, a certain item is not required to be further defined and explained in subsequent drawings. Meanwhile, in the description of the present application, the terms "first" and "second" are only used for distinguishing description, and cannot be understood as indicating or implying relative importance.

The present application provides a laundry treatment device.

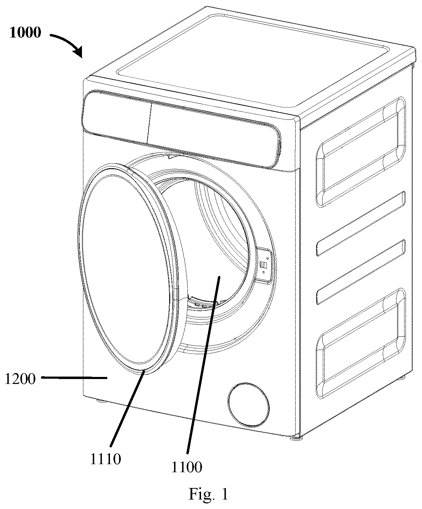

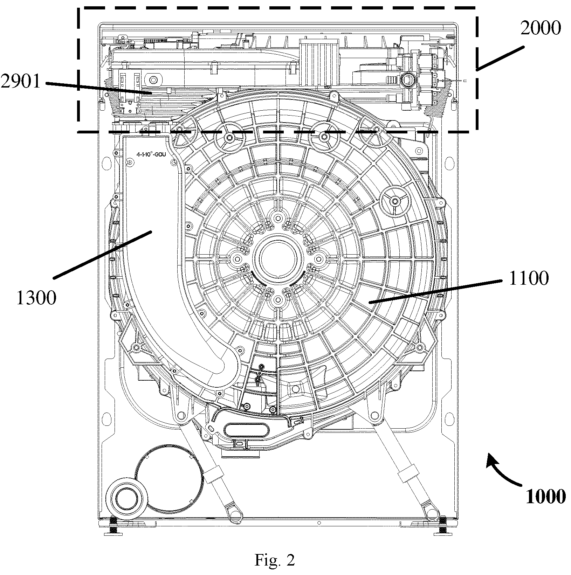

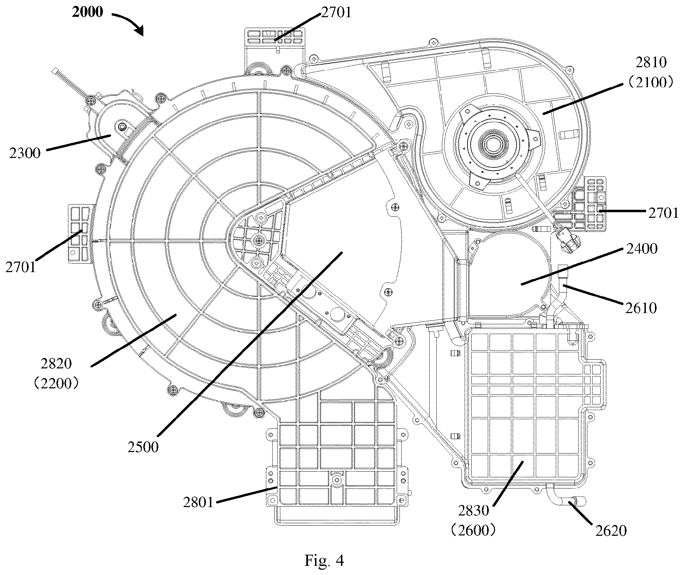

The present application provides a laundry treatment device. The laundry treatment device is used for treatments such as washing, rinsing, ironing and drying clothes. The laundry treatment device includes, but is not limited to, a washing machine, a dryer, a washer-dryer machine and other laundry treatment devices. Figs. 1-3 respectively show a perspective view, a rear view and a top view of a washer-dryer machine 1000 according to an embodiment of the present disclosure. Figs. 4-5 respectively show a top view and a perspective view of a drying apparatus 2000 in Figs. 2-3.

It should be noted that, although the laundry treatment device according to the embodiment of the present disclosure is illustrated with the side-opening washer-dryer machine 1000 shown in Figs. 1-3 in the present description, it should be understood that the laundry treatment device according to the embodiment of the present disclosure may be applied to any type of laundry treatment device, including but not limited to a side-opening rotary drum washing machine, a top-opening rotary drum washing machine, a pulsator washing machine, an agitator washing machine, a mini washing machine and the like.

As shown in Figs. 1-3, the washer-dryer machine 1000 includes a laundry holding apparatus 1100 for accommodating clothes to be treated (the "treat" here may be washing treatment or drying treatment). The laundry holding apparatus 1100 may be arranged as a rotary drum. The rotary drum may include an inner drum and an outer drum. The inner drum is used for placing the clothes to be treated and rotates under the action of an inner drum driving motor, while the outer drum is fixed relative to a machine body by means of hanging. A door body 1110 is arranged at the position, corresponding to the laundry holding apparatus 1100, on a housing 1200 of the washer-dryer machine 1000. The door body 1110 is pivotally connected with the housing 1200. The opening and closing of the door body 1110 may be manually controlled by a user or controlled by an electronic controller.

As shown in Figs. 1-3, the washer-dryer machine 1000 includes a drying apparatus 2000 for drying the clothes in the laundry holding apparatus 1100. The drying apparatus 2000 is located above the laundry holding apparatus 1100. Relative positions of the laundry holding apparatus 1100 and the drying apparatus 2000 are not fixed, and the laundry holding apparatus 1100 and the drying apparatus 2000 may be oppositely arranged up and down or front and back. For example, the drying apparatus 2000 is arranged above the laundry holding apparatus 1100 (Fig. 2); or the drying apparatus 2000 is arranged behind the laundry holding apparatus 1100, or the drying apparatus 2000 is arranged below the laundry holding apparatus 1100, or the drying apparatus 2000 is arranged at a side of the laundry holding apparatus 1100 (not shown).

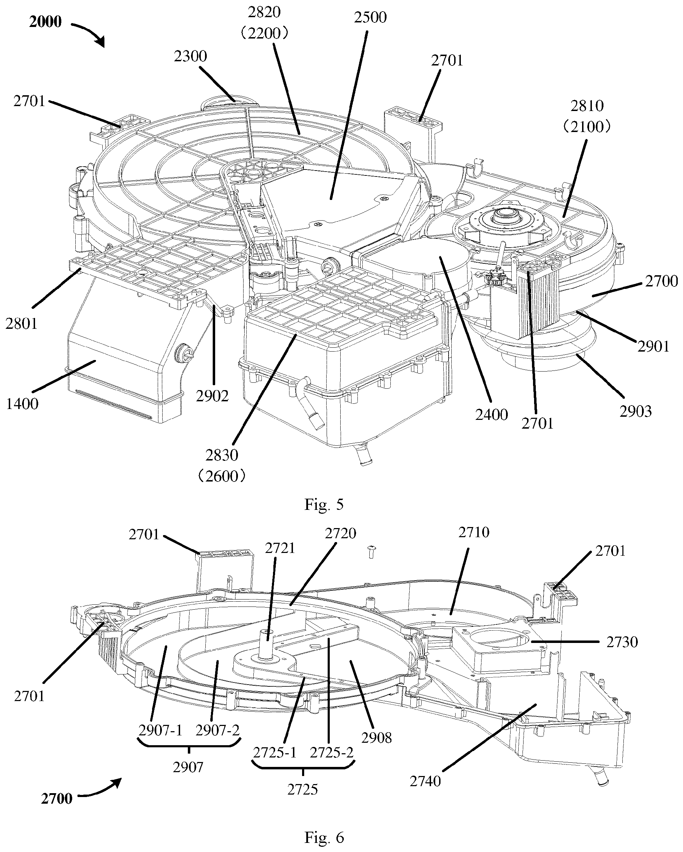

As shown in Figs. 4 and 5, in the embodiment of the present disclosure, the drying apparatus 2000 includes a moisture adsorbing passage, a regenerating passage, a circulating fan 2100, a moisture adsorption and removal member 2200, a driving part 2300 for the moisture adsorption and desorption rotary disk and a regenerating fan 2400.

As shown in Fig. 2, a first air inlet 2901 of the moisture adsorbing passage is communicated with an air outlet duct 1300 of the laundry holding apparatus 1100. A first air outlet 2902 of the moisture adsorbing passage is communicated with an air inlet duct of the laundry holding apparatus 1100. For example, as shown in Fig. 5, the first air outlet 2902 is communicated with the air inlet duct (not shown in Fig. 5) of the laundry holding apparatus 1100 through a connector 1400. The circulating fan 2100 is located in the moisture adsorbing passage and is used for forming a circulating airflow in the laundry holding apparatus 1100 and the moisture adsorbing passage. The regenerating fan 2400 is located in the regenerating passage and is used for forming a moisture desorption airflow in the regenerating passage.

With continued reference to Figs. 2 and 5, the laundry holding apparatus 1100 has a first airflow inlet and a first airflow outlet. The first air inlet is the joint between the air inlet duct and the laundry holding apparatus 1100. In other words, the first airflow inlet on the laundry holding apparatus 1100 is communicated with the drying apparatus 2000 through the air inlet duct. The first airflow outlet is the joint between the air outlet duct 1300 and the laundry holding apparatus 1100. In other words, the first airflow outlet on the laundry holding apparatus 1100 is communicated with the drying apparatus 2000 through the air outlet duct 1300.

A part of the moisture adsorption and removal member 2200 is located on the moisture adsorbing passage and the other part is located on the regenerating passage, so that both the circulating airflow in the moisture adsorbing passage and the moisture desorption airflow in the regenerating passage flow through the moisture adsorption and removal member 2200. The driving part 2300 for the moisture adsorption and desorption rotary disk may be, for example, a driving motor for moving (e.g., rotating) the moisture adsorption and removal member 2200 relative to the moisture adsorbing passage and the regenerating passage. In a rotation process of the moisture adsorption and removal member 2200, the moisture in the circulating airflow is adsorbed and removed through the moisture desorption airflow.

According to some embodiments, the moisture adsorption and removal member 2200 may include a moisture adsorption and desorption rotary disk 2201. The moisture adsorption and desorption rotary disk 2201 is provided with a moisture adsorbent for moisture adsorption thereon. The moisture adsorbent may be, for example, zeolite (molecular sieve), alkali aluminosilicate (13X molecular sieve), lithium chloride, silica gel, modified silica gel, activated alumina, etc.

The driving part 2300 for the moisture adsorption and desorption rotary disk is used for driving the moisture adsorption and desorption rotary disk 2201 to rotate relative to the moisture adsorbing passage and the regenerating passage. The circulating airflow and the moisture desorption airflow simultaneously flow through the moisture adsorption and desorption rotary disk 2201. The region on the moisture adsorption and desorption rotary disk 2201 where the circulating airflow flows is a moisture adsorbing region, and the region where the moisture desorption airflow flows is a regenerating region.

According to some embodiments, as shown in Figs. 4 and 5, the drying apparatus 2000 may further include a heater 2500 and a condenser 2600 which are arranged on the regenerating passage. The heater 2500 covers the regenerating region of the moisture adsorption and removal member 2200 (the moisture adsorption and desorption rotary disk 2201) and is used for heating the regenerating region of the moisture adsorption and removal member 2200 (the moisture adsorption and desorption rotary disk 2201) to desorb the moisture adsorbed by the moisture adsorption and removal member 2200 (the moisture adsorption and desorption rotary disk 2201). The condenser 2600 is used for condensing the moisture desorption airflow flowing out of the regenerating region of the moisture adsorption and removal member 2200 to dry the moisture desorption airflow.

According to some embodiments, the drying apparatus 2000 further includes an upper shell and a lower shell. The upper shell and the lower shell wrap and fix various components of the drying apparatus 2000, so that the drying apparatus 2000 forms an integral module.

According to some embodiments, the upper shell and the lower shell of the drying apparatus 2000 may be separate shells corresponding to individual components of the drying apparatus 2000 respectively, or may be integrated shells corresponding to multiple components of the drying apparatus 2000. For example, in the embodiments shown in Figs. 4 and 5, the lower shell 2700 of the drying apparatus 2000 is an integrated shell, and Fig. 6 further shows a structural diagram of the integrated lower shell 2700. As shown in Fig. 6, the lower shell 2700 is provided with a mounting part 2710 for mounting the circulating fan 2100, a mounting part 2720 (i.e., a first mounting part) for mounting the moisture adsorption and removal member 2200, a mounting part 2730 for mounting the regenerating fan 2400, and a mounting part 2740 for mounting the condenser 2600. The upper shell of the drying apparatus 2000 is a separate shell, including an upper shell 2810 for mounting the circulating fan 2100, an upper shell 2820 for mounting the moisture adsorption and removal member 2200, and an upper shell 2830 for mounting the condenser 2600.

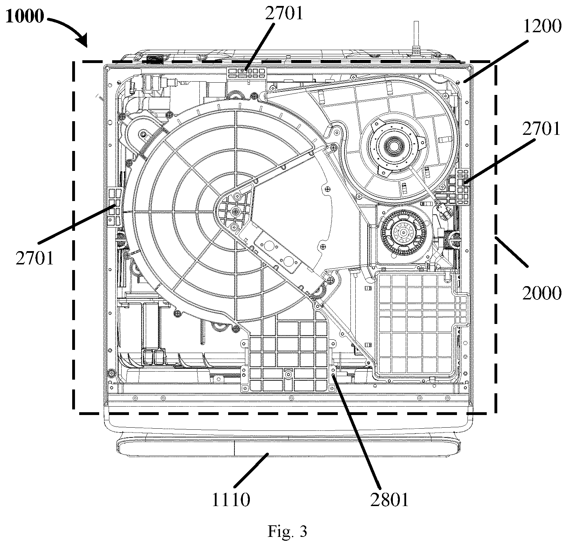

According to some embodiments, as shown in Figs. 3-5, the lower shell 2700 of the drying apparatus 2000 is provided with a plurality of fourth mounting parts 2701, and the upper shell 2820 is provided with a fifth mounting part 2801. The fourth mounting parts 2701 and the fifth mounting part 2801 are overlapped and fixed on the housing 1200 of the washer-dryer machine 1000, thereby realizing the mounting and fixing of the whole drying apparatus 2000. In the present embodiment, there is no direct rigid connection between the drying apparatus 2000 and the laundry holding apparatus 1100, so that vibration of the laundry holding apparatus 1100 in a working process can be prevented from being transmitted to the drying apparatus 2000 (especially the moisture adsorption and removal member 2200), thereby improving the stability and reliability of the drying apparatus 2000.

According to some embodiments, as shown in Figs. 2 and 5, the first air outlet 2902 may be communicated with the air outlet duct 1300 of the laundry holding apparatus 1100 through a flexible pipe (such as a corrugated hose) 2903. According to some embodiments, a filter (e.g., a filter screen) for filtering impurities and lint may be arranged in the air outlet duct 1300. In addition, the connector 1400 may also be communicated with the air inlet duct of the laundry holding apparatus 1100 through a flexible pipe (not shown in Figs. 2 and 5). Therefore, the vibration of the laundry holding apparatus 1100 can be prevented from being transmitted to the drying apparatus 2000 (especially the moisture adsorption and removal member 2200), thereby improving the stability and reliability of the drying apparatus 2000.

According to some embodiments, as shown in Fig. 4 and Fig. 5, various components of the drying apparatus 2000 (including the circulating fan 2100, the moisture adsorption and removal member 2200, the driving part 2300 for the moisture adsorption and desorption rotary disk, the regenerating fan 2400, the heater 2500, the condenser 2600, etc.) are horizontally arranged, wherein rotary shafts of rotating components (including the circulating fan 2100, the moisture adsorption and removal member 2200, the driving part 2300 for the moisture adsorption and desorption rotary disk and the regenerating fan 2400) are approximately parallel to each other and approximately perpendicular to the upper shell of the washer-dryer machine 1000 and a rotary shaft of the laundry holding apparatus 1100. According to the present embodiment, a height of the washer-dryer machine 1000 can be minimized, and the space is saved.

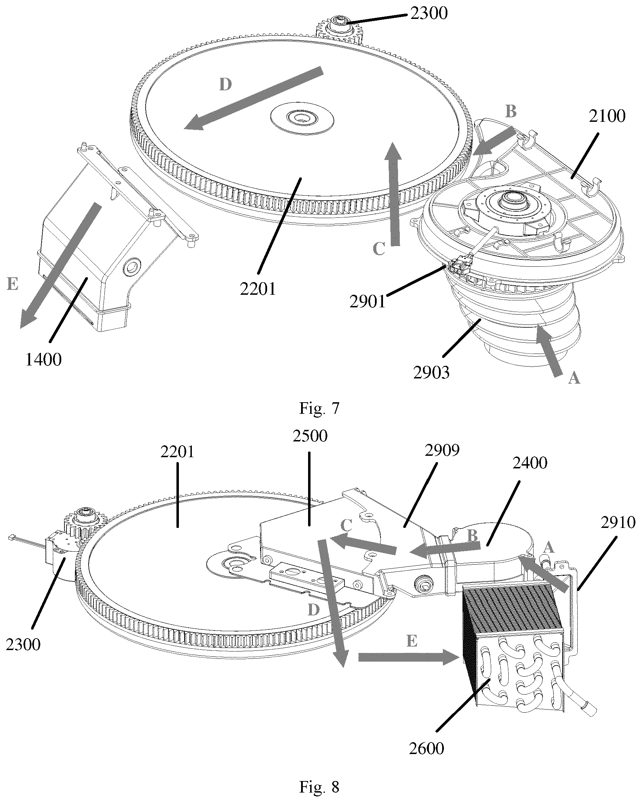

Under the action of the circulating fan 2100, the circulating airflow may be formed between the moisture adsorbing passage and the inner drum. As shown in Fig. 7, under the action of the circulating fan 2100, the airflow in the inner drum enters the first air outlet 2902, that is, the air inlet of the circulating fan 2100 (as shown by the arrow A) through the air outlet duct (with a filter therein) of the inner drum and the flexible pipe 2903 in sequence. The airflow flows from the air outlet of the circulating fan 2100 to the lower side of the moisture adsorption and desorption rotary disk 2201 (as shown by the arrow B), passes through the moisture adsorption and desorption rotary disk 2201 to reach the upper side of the moisture adsorption and desorption rotary disk 2201 (as shown by the arrow C), flows into the upper side space (corresponding to the moisture adsorbing region) of the moisture adsorption and desorption rotary disk 2201 (as shown by the arrow D), and enters the inner drum through the first air inlet 2901 and the connector 1400 (as shown by arrow E).

Under the action of the regenerating fan 2400, the moisture desorption airflow may be formed in the regenerating passage. As shown in Fig. 8, under the action of the regenerating fan 2400, the moisture desorption airflow enters the air inlet of the regenerating fan 2400 (as shown by the arrow A), passes through the regenerating fan 2400, and enters the heater 2500 (as shown by the arrows B and C) through the first connector 2909. The heater 2500 is located above the regenerating region of the moisture adsorption and desorption rotary disk 2201. After flowing into the heater 2500, the moisture desorption airflow passes through the regenerating region of the moisture adsorption and desorption rotary disk 2201 from top to bottom (as shown by the arrow D), and then flows into the condenser 2600 (as shown by the arrow E). The air outlet of the housing (not shown in Fig. 8) of the condenser 2600 is communicated with the air inlet of the regenerating fan 2400 through a second connector 2910, so that the regenerating passage forms a closed loop. The moisture desorption airflow condensed by the condenser 2600 flows into the air inlet of the regenerating fan 2400 again through the second connector 2910 (as shown by the arrow A), so that the moisture desorption airflow can circularly flow in the regenerating passage. The closed-loop regenerating passage can avoid the interaction between the moisture desorption airflow and an external environment of the washer-dryer machine, and reduce the impact on the external environment (such as the impact on the humidity of external air).

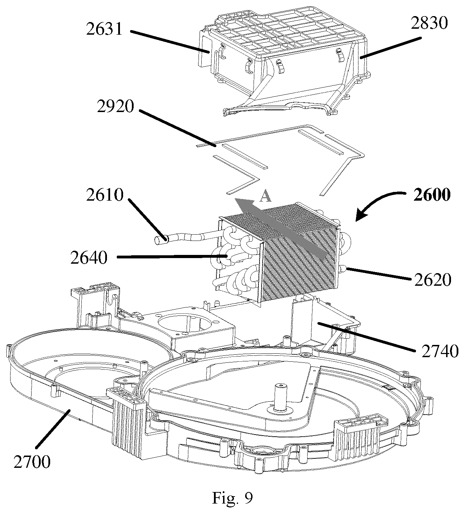

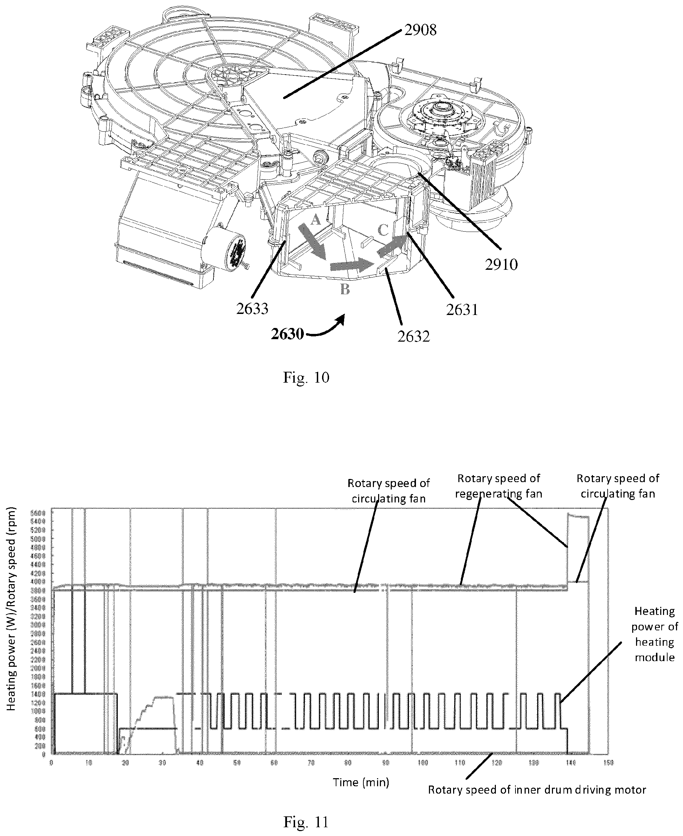

Figs. 9 and 10 show a perspective view and an exploded view of the second connector 2910 respectively. Fig. 9 shows a schematic diagram of a fixing way of the condenser 2600 and the lower shell 2700. As shown in Fig. 9, the upper shell 2830 of the condenser is matched with the mounting part 2740 (i.e., the lower shell of the condenser) for mounting the condenser in the lower shell 2700. The upper shell 2830 of the condenser wraps the condenser 2600, squeezes a sealing strip 2920 around the condenser 2600 downward, and is fixed with the mounting part 2740 in a sealing manner. The upper shell 2830 of the condenser and the mounting part 2740 form a complete housing of the condenser 2600, that is, a condenser housing. A second air inlet 2633 is formed on the housing of the condenser 2600. The airflow heated by the heater flows through the regenerating region of the moisture adsorption and desorption rotary disk 2201 and then enters the condenser 2600 through the second air inlet 2633. A second air outlet 2631 is also formed in the housing of the condenser 2600, and the second air outlet 2631 is connected to the air inlet of the regenerating fan 2400 through the second connector 2910.

Fig. 10 shows a sectional view of the condenser housing 2630. As shown in Fig. 10, the high-temperature and high-humidity removal airflow passing through the regenerating region 2908 enters the condenser housing 2630 through the second air inlet 2633 (as shown by the arrow A), is subjected to drying treatment of the condenser 2600 (not shown in Fig. 10) (as shown by the arrow B), and flows from the second air outlet 2631 to the second connector 2910 (as shown by the arrow C).

According to some embodiments, as shown in Fig. 10, a baffle 2632 is arranged at the position of the bottom surface of the condenser housing 2630 close to the second air outlet 2631. The baffle 2632 can improve a condensing effect of the condenser 2600, so that the moisture desorption airflow can be fully dried by the condenser 2600. For example, the baffle 2632 can avoid a case that part of the moisture desorption airflow entering the condenser housing 2630 cannot be condensed and dried since this part of airflow directly flows out from a gap between the condenser 2600 and the bottom surface of the condenser housing 2630 without passing through the condenser 2600.

As shown in Fig. 9, the condenser 2600 is provided with a condensate water pipe 2640 for circulating condensate water therein. The condensate water pipe 2640 further includes a water inlet 2610 and a water outlet 2620. The direction shown by the arrow A in Fig. 9 is a flow direction of the moisture desorption airflow in the condenser 2600.

According to some embodiments, a sensor for detecting the condensate water state, such as a temperature sensor and a flow sensor, may be arranged in the condensate water pipe 2640, or an inductance sensor may be arranged outside a condensate water inlet pipe for detecting whether there is condensate water flowing through the condensate water pipe 2640. Based on state data detected by the sensor, the water flow in the condensate water pipe 2640 may be adjusted or a warning may be sent, thereby ensuring normal working of the condenser 2600 and improving the condensing effect. For example, if the temperature sensor detects that a temperature of the condensate water is too high, the current condensing effect may be poorer, and a flow rate of the condensate water may be increased accordingly, thereby reducing the water temperature of the condensate water and improving the condensing effect. For another example, if the flow sensor detects that the volume of flow of the condensate water is too small, there may be a risk of liquid leakage of the condensate water pipe 2640, and a warning message may be sent to remind the user of checking or repairing the condensate water pipe 2640. Of course, the temperature sensor may also be arranged at the air inlet and/or air outlet of the condenser shell to determine whether the condenser works normally according to a temperature detection value or a temperature detection difference value or a temperature difference value between the air inlet and the air outlet.

According to some embodiments, as shown in Fig. 9, the condensate water pipe 2640 may be a serpentine pipe. In the example of Fig. 9, the condensate water pipe 2640 is circuitously arranged in the condenser 2600, so that a contact area between the moisture desorption airflow and the condensate water pipe 2640 can be increased, thereby fully condensing the moisture desorption airflow. As shown in Fig. 9, the condenser 2600 includes a first side and a second side which are opposite to each other in the flow direction of the moisture desorption airflow (referring to the arrow A), wherein the first side is located downstream of the second side. In an example not shown, the water inlet 2610 and the water outlet 2620 of the condensate water pipe 2640 are both located on the sidewall of the condenser 2600, the sidewall connects the first side and the second side of the condenser 2600, and the water inlet 2610 and the water outlet 2620 are closer to the first side than the second side. In such an example, the condensate water pipe 2640 extends from the water inlet 2610 toward the second side of the condenser 2600 along a first zigzag path to a position away from the first side, and extends from this position toward the first side along a second zigzag path to the water outlet 2620, wherein a length of the first zigzag path is greater than a length of the second zigzag path, for example, twice of the length of the second zigzag path. It will be understood that such an arrangement can be advantageous since the temperature of the condensate water gradually increases from the first side of the condenser 2600 to the second side of the condenser 2600 due to heat release of the moisture desorption airflow, and conversely, the temperature of the moisture desorption airflow gradually decreases from the second side of the condenser 2600 to the first side of the condenser 2600 due to heat absorption of the condensate water, so that a certain temperature difference is maintained between the moisture desorption airflow and the condensate water in the whole condensing process, thereby improving the condensing effect.

In some embodiments, the drying apparatus 2000 further includes a shell, such as an upper shell and a lower shell. The upper shell and the lower shell wrap and fix various components of the drying apparatus 2000, so that the drying apparatus 2000 forms an integral module. The shell includes a lower shell 2700 and an upper shell 2820 which accommodate the moisture adsorption and desorption rotary disk 2201. The lower shell 2700 is provided with two separating ribs, such as a first separating rib 2725-1 of the lower shell and a second separating rib 2725-2 of the lower shell shown in Fig. 6, and the upper shell 2820 is also provided with two separating ribs (not shown). The central position of the lower shell 2700 is provided with a stub shaft 2721 and an accommodating part for mounting the stub shaft 2721, and the separating rib 2725-1 of the lower shell 2700 may be arranged to extend from the inner circumferential wall of the shell to the accommodating part of the shell. The other separating rib 2725-2 of the lower shell 2700 may be arranged to extend from another position of the inner circumferential wall of the shell to the accommodating part of the shell. The at least two separating ribs are not intersected with the stub shaft 2721, so that the internal space formed by butting of the lower shell 2700 and the upper shell 2820 can be divided into two spaces, namely, a first space and a second space, or a moisture adsorption space and a regenerating space, or a moisture adsorbing region 2907 and a regenerating region 2908. The "first space" described above may be interpreted as a space jointly formed by part of the inner walls of the lower shell 2700 and the upper shell 2820, the sidewalls of the first separator and the second separator facing the moisture adsorbing region, and the sidewalls facing the moisture adsorbing region 7 and generated by extended contact portions of the first separator and the second separator; and the "second space" may be interpreted as a space jointly formed by another part of the inner wall of the lower shell, the sidewalls of the first separator and the second separator facing the regenerating region, and part of the wall of the heating assembly 2500 described later. In some embodiments, the accommodating part is annular, and the at least two separating ribs are arranged to be tangent to the outer circumference of the annular accommodating part.

The first mounting part 2720 of the lower shell 2700 is also provided with at least one third separator 2726. The at least one third separator 2726 divides the moisture adsorbing region 2907 into at least a first moisture adsorbing region 2907-1 and a second moisture adsorbing region 2907-2, so that the circulating airflow flowing into the moisture adsorbing region 2907 can be divided. After the circulating airflow enters the space between the lower shell 2700 and the moisture adsorption and removal member 2200 through the circulating fan, it is divided into at least two parts by the third separator 2726 in a relatively uniform way (that is, volumes of the airflows of the two parts are almost the same), so that it can be avoided that more circulating airflow flows to the circumference of the moisture adsorption and removal member 2200 under the action of a centrifugal force, while fewer circulating airflow flows to an region near the circle center. According to the present embodiment, moisture adsorbing efficiency of the moisture adsorption and removal member 2200 can be improved, and uniform and stable moisture adsorption is realized.

The shell in the above embodiment may accommodate the moisture adsorption and desorption rotary disk 2201. The internal space of the shell is at least divided into the moisture adsorption space 2907 and the moisture desorption space 2908. When the moisture adsorption and desorption rotary disk 2201 rotates to the moisture adsorption space 2907, a moisture adsorbing function is performed. When the moisture adsorption and desorption rotary disk 2201 rotates to the moisture desorption space 2908, a moisture desorption function is performed.

In an embodiment, the heater 2500 covers at least part of the moisture desorption space 2908, and is used for heating the moisture desorption space 2908 or at least part of the moisture adsorption and desorption rotary disk 2201 located in the moisture desorption space 2908. The condenser 2600 is arranged downstream of the moisture desorption space 2908, and is used for condensing the airflow flowing out of the moisture desorption space 2908.

The following describes a treatment process of the laundry treatment device:
The laundry treatment device may execute one or more operations including a laundry washing operation and a drying operation. The laundry washing operation may include a washing stage, a rinsing stage and a dehydration stage. The washing stage may include first washing and/or second washing. The rinsing stage may include first rinsing and/or second rinsing (final rinsing). The dehydration stage may include first dehydration (normal temperature dehydration) and/or second dehydration (thermal dehydration).

The drying operation may include a preheating stage, a heating and drying stage and a cooling stage.

The preheating stage is used for heating the moisture adsorption and desorption rotary disk 2201 in the drying apparatus to improve moisture adsorbing efficiency and moisture removing efficiency of the moisture adsorption and desorption rotary disk 2201. When a moist airflow in the laundry holding apparatus 1100 is circulated to the moisture adsorption and desorption rotary disk 2201, it needs a certain temperature to achieve moisture adsorption and removal actions. The preheating stage and the dehydration stage may overlap for a time period, that is, the preheating stage is started before the dehydration stage ends. If the second dehydration exists, the time that the heater 2500 starts running will be earlier and the time of the preheating stage will be shorter. That is, if the second dehydration exists, part of a heating process in the preheating stage is advanced into the second dehydration.

The heating and drying stage is used for heating and drying the clothes in the laundry holding apparatus 1100. The moist airflow in the laundry holding apparatus 1100 continuously flows to the moisture adsorption and desorption rotary disk 2201, and the moisture adsorption and desorption rotary disk 2201 adsorbs the moisture in the moist airflow and delivers the resulted dry airflow to the laundry holding apparatus 1100 until the heating and drying are completed. In the heating and drying stage, the laundry treatment device is in a stable running stage. The stable running is mainly embodied in that the difference between the temperature near the first airflow outlet (the temperature in the laundry holding apparatus 1100) and the temperature near the air inlet of the laundry holding apparatus 1100 is within a stable change range. For example, in the laundry treatment device, the temperature difference between the temperature near the first airflow outlet (or the temperature in the laundry holding apparatus 1100) and the temperature near the air inlet of the laundry holding apparatus 1100 is within a temperature range of 18 to 30°C.

The temperature detection near the first airflow outlet may be set as the detection of certain one or more temperature positions in a temperature field near the first airflow outlet. The temperature detection in the laundry holding apparatus 1100 may be set as the detection of certain one or more temperature positions in a temperature field in the laundry holding apparatus 1100. The detection of the temperature near the air inlet of the laundry holding apparatus 1100 may be set as the detection of certain one or more temperature positions in a temperature field near the first airflow inlet.

The cooling stage is used for cooling the clothes in the laundry holding apparatus 1100, so that the clothes in the laundry holding apparatus 1100 have a proper temperature when leaving the drum and the dried clothes have a good hand feeling.

In the drying operation, if the process of judging whether the drying is completed is not accurate, the drying will be stopped in advance when the clothes are still moist; or the clothes have been dried, but they are still heated and dried at high temperature, leading to irreversible damage to the clothes.

In a set of embodiments, the present application provides a control method of a laundry treatment device. The operated process of the laundry treatment device at least includes a drying operation. The drying operation further includes a heating and drying stage and a cooling stage.

When the heater 2500 in the drying apparatus 2000 is in operation, the temperature and/or humidity near the first airflow outlet are detected. Running power of the heater 2500 may be dynamically adjusted or the heater runs at fixed power. When detecting the temperature and/or humidity near the first airflow outlet, a temperature sensor and/or a humidity sensor (which may be arranged on the surface of an air outlet passage or embedded in the air outlet passage) may be arranged on the air outlet passage of the first airflow outlet.

When the temperature change rate near the first airflow outlet is greater than a first threshold of temperature change rate, and/or when the humidity change rate near the first airflow outlet is less than a first threshold of humidity change rate, it is judged that the heating and drying stage is completed, the process proceeds to the cooling stage, and the heater 2500 in the drying apparatus 2000 is turned off. In an embodiment, only the temperature near the first airflow outlet is detected, and whether the heating and drying stage is completed is judged according to whether the temperature change rate reaches the first threshold of temperature change rate. In another embodiment, only the humidity near the first airflow outlet is detected, and whether the heating and drying stage is completed (whether to turn off the heater 2500 in the drying apparatus 2000) is judged according to whether the humidity change rate reaches the first threshold of humidity change rate. In yet another embodiment, the temperature near the first airflow outlet and the humidity near the first airflow outlet are simultaneously detected, and whether the heating and drying stage is completed (whether to turn off the heater 2500 in the drying apparatus 2000) is judged according to whether the temperature change rate and the humidity change rate reach the first threshold of temperature change rate and the first threshold of humidity change rate at the same time.

In the present embodiment, a method for judging whether the heating and drying stage is completed is provided. By means of the method, whether the heating and drying stage is completed can be judged more punctually and accurately, the heater 2500 can be turned off in time to avoid the situation that the heater 2500 has stopped while the clothes are not dry, and also to avoid the irreversible damage to the clothes caused by excessive heating and drying.

In an embodiment, the temperature change rate and the humidity change rate may be calculated by the following formulas:
the temperature change rate = (a currently collected temperature - a temperature collected at the previous time) / a time difference between two temperature collections; and
the humidity change rate = (a currently collected humidity - previously collected humidity) / a time difference between two humidity collections. Specifically, when the temperature change rate near the first airflow outlet is calculated, the temperature detected near the first airflow outlet is adopted. When the humidity change rate near the first airflow outlet is calculated, the humidity detected near the first airflow outlet is adopted.

In the present embodiment, value ranges of the first threshold of temperature change rate and the first threshold of humidity change rate may be different according to different structural settings of the laundry treatment device. In an embodiment, the first threshold of temperature change rate may be set to 3°C/min. The first threshold of humidity change rate may be set to 5%RH/min. In other embodiments, the first threshold of temperature change rate may be set between 1°C/min-6°C/min. The first threshold of humidity change rate may be set between 3%RH/min and 10%RH/min.

In an embodiment, after the heater 2500 in the drying apparatus 2000 is turned off, the driving part 2300 for the moisture adsorption and desorption rotary disk keeps running for a first time period. It may be interpreted as that when the heating and drying stage is completed, the heater 2500 stops working, and the driving part 2300 for the moisture adsorption and desorption rotary disk does not stop working and keeps running for the first time period. The length of the first time period may be set independently or according to specific conditions of different drying operations, or the driving part 2300 for the moisture adsorption and desorption rotary disk is turned off after the cooling stage is completed.

In the present embodiment, when the heating and drying stage is completed, the heater 2500 stops working, so that the drying apparatus 2000 quickly enters the cooling stage of the drying operation. The driving part 2300 for the moisture adsorption and desorption rotary disk does not stop working, and may drive the moisture adsorption and desorption rotary disk 2201 to continuously rotate, so as to quickly disperse residual heat of the heater 2500 and promote quick cooling-down of a high-temperature airflow, thus shortening the time of the cooling stage.

In an embodiment, in the preheating stage, before the heater 2500 is turned on, the moisture adsorption and desorption rotary disk 2201 runs first, so that the moisture adsorption and desorption rotary disk 2201 is heated more evenly and dry heating caused by the fact that the heater 2500 heats a certain position of the moisture adsorption and desorption rotary disk 2201 for a long time is avoided.

In an embodiment, when the heating and drying stage is completed, the circulating fan 2100 keeps running, and the regenerating fan 2400 keeps running at higher power.

In the present embodiment, when the heating and drying stage is completed, the circulating fan 2100 for forming the circulating airflow passing between the laundry holding apparatus 1100 and the moisture adsorbing region of the drying apparatus 2000 keeps running, so that the airflow circulation between the laundry holding apparatus 1100 and the drying apparatus 2000 can be realized, thus speeding up cooling-down of the clothes in the laundry holding apparatus 1100. On the other hand, the regenerating fan 2400 for forming the regenerating airflow passing through the moisture desorption space works at higher power, and may deliver more dry regenerating airflow to the moisture desorption space, and take away a high-temperature moist airflow generated in the moisture desorption space, thus speeding up the cooling-down of the clothes in the laundry holding apparatus 1100. The inlet air of the regenerating fan 2400 may be from the atmosphere or the condenser 2600.

In an embodiment, when the temperature near the first airflow outlet is greater than or equal to a first abnormal temperature value, an abnormality of the drying operation is determined, and an alarm signal indicating the abnormality of the drying operation is sent. For example, the normal temperature near the first airflow outlet may be set to 53±5°C (such as 50°C, 53°C, 55°C, 57°C or 58°C), and the first abnormal temperature value may be set to 60°C. The normal temperature near the first airflow outlet refers to a temperature point in the cross-sectional temperature field where the first airflow outlet is located.

The present embodiment provides a method for judging the abnormality of the drying operation. The abnormality of the drying operation may be an abnormality of the preheating stage, an abnormality of the heating and drying stage, or an abnormality of the cooling stage. If a fault of the condenser 2600, a fault of the regenerating fan 2400, blocking of the filter screen, or generation of a water film on the filter screen occurs in the laundry treatment device, the temperature near the first airflow outlet may be greater than or equal to the first abnormal temperature value (60°C).

In an embodiment, the condenser 2600 has a second air inlet and a second air outlet. The airflow flowing out of the moisture desorption space 2908 enters the condenser 2600 through the second air inlet, and then enters the heater 2500 through the second air outlet after being condensed by the condenser 2600. The drying operation also includes detecting a temperature near the second air inlet, and when the temperature near the second air inlet reaches a first temperature threshold, the heating and drying stage is completed. The first temperature threshold is a normal temperature near the second air inlet in the drying operation and may be generally set to 70±5°C, and the first temperature threshold may also be set to 68°C, 69°C, 72°C, 73°C and other temperature values. When the temperature near the second air inlet is greater than or equal to a second abnormal temperature value, the abnormality of the drying operation is determined. The second abnormal temperature value may be set to 100°C. That is, when the temperature near the second air inlet is greater than or equal to 100°C, the abnormality of the drying operation is determined, and the alarm signal indicating the abnormality of the drying operation is sent. The abnormality of the drying operation may be considered as an abnormality of the preheating stage, an abnormality of the heating and drying stage or an abnormality of the cooling stage. If the fault of the condenser 2600, the fault of the regenerating fan 2400, the blocking of the filter screen, or generation of the water film on the filter screen occurs in the laundry treatment device, the temperature near the second air inlet may be greater than or equal to the second abnormal temperature value (100°C).

In an embodiment, the drying operation further includes detecting a temperature near the second air outlet, and when the temperature near the second air outlet reaches a second temperature threshold, the heating and drying stage is completed, and the heater 2500 is turned off. The second temperature threshold is a temperature near the second air outlet when the drying apparatus 2000 runs normally. Generally, the second temperature threshold may be set to 60°C±5°C. When the temperature near the second air outlet is greater than or equal to a third abnormal temperature value, the abnormality of the drying operation is determined, and the alarm signal indicating the abnormality of the drying operation is sent. The third abnormal temperature value may be set to 90°C.

The abnormality of the drying operation may be considered as the abnormality of the preheating stage, the abnormality of the heating and drying stage or the abnormality of the cooling stage. If the fault of the condenser 2600, the fault of the regenerating fan 2400, the blocking of the filter screen, or generation of the water film on the filter screen occurs in the laundry treatment device, the temperature near the second air inlet may be greater than or equal to the second abnormal temperature value (100°C).

**In** the present embodiment, whether the heating and drying stage is completed is judged by detecting whether the temperature near the second air outlet reaches the second temperature threshold, so as to determine whether to turn off the heater 2500. In the present embodiment, by detecting whether the temperature near the second air outlet is greater than or equal to the third abnormal temperature value, it is determined whether it is necessary to issue the alarm signal indicating the abnormality of the drying operation. Whether the detected temperature near the second air outlet is greater than or equal to the third abnormal temperature value is determined, and the detection result is timely fed back to a control system of the laundry treatment device. The control system of the laundry treatment device prompts the user to check whether each of structural components of the drying apparatus 2000 has a fault in time.

**In** an embodiment, in the drying operation, when the temperature near the first airflow inlet is less than a preset minimum temperature near the first airflow inlet, running power of the heater 2500 is controlled to be increased. When the temperature near the first airflow inlet is greater than or equal to a preset maximum temperature near the first airflow inlet, the running power of the heater 2500 is controlled to be reduced.

**In** the present embodiment, a dynamic heating method in the drying operation is provided. The preset minimum temperature near the first airflow inlet may be set between 60°C and 70°C, and the preset maximum temperature near the first airflow inlet may be set between 75°C and 80°C. For example, in an embodiment, when the temperature near the first airflow inlet is less than the preset minimum temperature of 65°C near the first airflow inlet, the running power of the heater 2500 is controlled to be increased. When the temperature near the first airflow inlet is greater than or equal to the preset maximum temperature of 78°C near the first airflow inlet, the running power of the heater 2500 is controlled to be reduced.

**In** an embodiment, the heating and drying stage includes controlling the heater 2500 to run within a preset heating power range in a fluctuating manner to control the temperature near the first airflow inlet within a preset temperature range. In an embodiment, the heater 2500 runs within a preset heating power range of 400W to 1600W in a fluctuating manner. In an embodiment, the heater 2500 runs within a preset heating power range of 600Wto 1400W in a fluctuating manner to control the temperature near the first airflow inlet within a preset temperature range of 60°C to 80°C. In an embodiment, the temperature near the first airflow inlet is in a preset temperature range of 70°C to 75°C. In the present embodiment, the heater 2500 may run between 600W and 1400W in the form of sine waves, square waves and sawtooth waves.

In an embodiment, the preset heating power is the power between first preset heating power and second preset heating power, and the heater 2500 runs in a fluctuating manner in the form of square waves between the first preset heating power and the second preset heating power. In an embodiment, the first preset heating power is between 400W and 800W, and the second preset heating power is between 1200W and 1600W.

For example, in an embodiment, the heater 2500 runs for a time period at the running power of 580W, and when the temperature near the first airflow inlet is less than the preset minimum temperature of 63°C near the first airflow inlet, the running power of the heater 2500 is controlled to be increased to, for example, 1300W for running for a time period. When the temperature near the first airflow inlet is greater than or equal to the preset maximum temperature of 75°C near the first airflow inlet, the running power of the heater 2500 is controlled to be reduced to, for example, 580W for continuously running for a time period. In the present embodiment, the heater 2500 runs at 580W for a time period, runs at 1300W for a time period and keeps running at 580W for a time period, and the three running time periods may be equal or unequal.

In an embodiment, in the heating and drying stage, the heater 2500 is controlled to run within the preset power range of 400W to 1600W in a fluctuating manner. In another embodiment, the heater 2500 runs in a fluctuating manner in the form of square waves within the preset heating power range of 600W to 1400W. A maximum value of the square waves is 1400W, and a minimum value of the square waves is 600W. The square waves may be square waves with an equal period or an unequal period.

In the above embodiment about heating power adjustment in operation of the heater 2500, the purpose is to keep the temperature near the first airflow inlet at a constant level of 60°C to 80°C as much as possible (in some embodiments, the temperature near the first airflow inlet is kept at a value between 70°C and 75°C as much as possible), and at the same time, to make the moisture adsorption and desorption rotary disk 2201 located in the regenerating region have a higher regenerating efficiency. Specifically, when the heater 2500 works at high heating power (for example, 1400W), the temperature of the moisture adsorption and desorption rotary disk 2201 located in the regenerating region and the temperature of the moisture desorption airflow may be increased, and the moisture adsorption and desorption rotary disk 2201 located in the regenerating region may also have a higher regenerating efficiency. When the heater 2500 works at lower heating power (for example, 600W), the temperature of the moisture adsorption and desorption rotary disk 2201 located in the regenerating region and the temperature of the moisture desorption airflow may be reduced, and the regenerating efficiency of the moisture adsorption and desorption rotary disk 2201 located in the regenerating region is reduced to a certain extent (but the regenerating efficiency may also be maintained within a certain regenerating efficiency range, and will not be greatly reduced). The heater 2500 runs between the high heating power and the low heating power in a fluctuating manner, which can not only maintain the temperature in the laundry holding apparatus 1100 or the temperature near the first airflow inlet in the whole drying operation, but also balance the regenerating efficiency of the moisture adsorption and desorption rotary disk 2201.

In an embodiment, the laundry treatment device at least includes the laundry holding apparatus 1100, the drying apparatus 2000, a drum inlet duct, a first temperature detecting unit and a control module. The heater 2500 is electrically connected to the control module. The first temperature detecting unit is arranged on the drum inlet duct and close to the air inlet, and is used for detecting the temperature of the airflow entering the laundry holding apparatus 1100 and transmitting the detected temperature to the control module. The drum inlet duct (that is, the air inlet duct of the laundry holding apparatus 1100) communicates the air outlet (the first air outlet 2902 shown in Fig. 5) arranged on the shell with the air inlet (the first airflow inlet) of the laundry holding apparatus.

The operated process of the laundry treatment device at least includes a drying operation, and in the drying operation, the heater 2500 runs within the preset heating power range. The control module adjusts the running power of the heater 2500 according to data of the first temperature detecting unit.

In an embodiment, the heater 2500 may include at least two temperature sensors. The at least two temperature sensors are used for detecting the temperature of the airflow entering the laundry holding apparatus 1100. The first temperature sensor is used for detecting whether the temperature of the airflow entering the laundry holding apparatus 1100 reaches 180°C. The second temperature sensor is used for detecting whether the temperature of the airflow entering the laundry holding apparatus 1100 reaches 200°C. When the temperature of the airflow entering the laundry holding apparatus 1100 reaches 180°C, the alarm signal indicating an abnormality of the drying operation is sent, and the heater 2500 is stopped. When the temperature of the airflow entering the laundry holding apparatus 1100 reaches 200°C, the power is cut off.

In an embodiment, adjusting, by the control module, the running power of the heater 2500 according to the data of the first temperature detecting unit includes: when the first temperature detecting unit detects that the temperature of the airflow entering the laundry holding apparatus 1100 is less than a minimum value of the drum inlet temperature, controlling, by the control module, to increase the running power of the heater 2500.

When the first temperature detecting unit detects that the temperature of the airflow entering the laundry holding apparatus 1100 is greater than a maximum value of the drum inlet temperature, the control module performs control to reduce the running power of the heater 2500.

In an embodiment, the minimum value of the drum inlet temperature is between 60°C and 70°C, for example, it may be set to 63°C, 65°C, 67°C, 68°C, 69°C or 70°C. The maximum value of the drum inlet temperature is between 75°C and 80°C, for example, it may be set to 75°C, 76°C, 78°C, 79°C or 80°C.

In an embodiment, the regenerating fan 2400 and the circulating fan 2100 run at constant power in the drying operation.

In an embodiment, the cooling stage includes controlling the heater 2500 to stop heating. The power of the circulating fan 2100 is controlled to be increased and/or the power of the regenerating fan 2400 is controlled to be increased. When the temperature near the first airflow inlet is less than a fourth temperature threshold, and/or when the temperature near the first airflow outlet is less than a fifth temperature threshold, it is judged that the cooling stage is completed, and the circulating fan 2100 and/or the regenerating fan 2400 are controlled to stop running. The specific fourth temperature threshold may be set between 50 and 65°C. For example, the fourth temperature threshold may be set to 53°C, 58°C, 62°C or 65°C. The temperature near the first airflow inlet should be interpreted as a temperature at any position in the temperature field near the air inlet. In the present embodiment, when entering the cooling stage, there is no need for heating and drying, so the heater 2500 may be turned off to stop heating. At this time, further cooling is needed, so the circulating fan 2100 and the regenerating fan 2400 run at increased power. In the present embodiment, when the temperature near the first airflow inlet is less than the fourth temperature threshold, it can be judged whether the cooling stage is completed in time, which saves the power consumed during running of the device.

In an embodiment, the cooling stage includes controlling the heater 2500 to stop heating. The power of the circulating fan 2100 is controlled to be increased and/or the power of the regenerating fan 2400 is controlled to be increased. When the temperature near the first airflow outlet is less than the fifth temperature threshold, it is judged that the cooling stage is completed. The fifth temperature threshold is a normal temperature, and may also change according to the change of seasons. For example, the fifth temperature threshold is set between 5 and 15°C in spring and autumn, between 15 and 35°C in summer and between 0 and10°C in winter. The specific fifth temperature threshold may be set in advance, or may be constantly modified in the operated process, so as to adjust the fifth temperature threshold to an optimal temperature value, thus achieving the purpose of accurately judging whether the cooling stage is completed and saving the power consumed during running of the device.

In any one of the above embodiments, when it is judged that the cooling stage is completed, the circulating fan 2100 and the regenerating fan 2400 are controlled to stop running. At this time, the drying operation has been completed, and the whole laundry treatment device may be turned off if no other operation is necessary.

In a set of embodiments, the present application also provides a control method of a laundry treatment device, and the operated process of the laundry treatment device includes a dehydration stage.

The dehydration stage includes at least first dehydration. After the first dehydration ends, a weight of the clothes in the laundry holding apparatus 1100 is obtained. Whether the weight is less than a preset weight threshold is judged. If the weight is less than the preset weight threshold, the second dehydration is not performed. For the existing laundry drying device, the process of second dehydration (thermal dehydration) may also exist, but a fixed thermal dehydration program/ability thereof cannot realize intelligent selection of whether the thermal dehydration is required in the current process. In the present embodiment, a judgment step is provided to judge the weight of the clothes after the first thermal dehydration ends. If the weight is less than the preset weight threshold, the second dehydration is not performed, so that the laundry treatment time can be shortened and energy can be saved to a certain extent on the premise of ensuring the laundry treatment effect.

If the weight is greater than or equal to the preset weight threshold, the second dehydration is performed, and the heater 2500 is turned on before the second dehydration. In this step, the second dehydration is a thermal dehydration process, and the temperature of the whole process of the second dehydration is not necessarily the same. In an embodiment, the second dehydration process may be set as a dehydration operation after the temperature in the laundry holding apparatus 1100 or the temperature near the first airflow outlet reaches a certain preset temperature. In another embodiment, it may be set that the heater 2500 is turned on after the first dehydration is completed, and then the second dehydration is performed immediately.

In an embodiment, the running stage of the laundry holding apparatus 1100 in the first dehydration and/or the second dehydration at least includes a stage of running at the first operation power (eccentric) and a second operation power running stage (main dehydration), and the first operation power is less than the second operation power. The first operation power and the second operation power are driving power of the inner drum, that is, the driving power of the inner drum driving motor.

If the second dehydration is not performed, the heater 2500 is controlled to run at the first heating power after the second operation power running stage of the first dehydration is completed.

In the present embodiment, controlling the heater 2500 to run at the first heating power may be regarded as a second dehydration (thermal dehydration) step or as a part of the preheating stage in the drying operation, and turning on the heater 2500 in the dehydration stage may save drying time. The specific first heating power may be the maximum heating power of the heater 2500.

In an embodiment, if the second dehydration is performed, after the second operation power running stage of the first dehydration is completed, the heater 2500 is controlled to run at the second heating power, so as to realize that the second dehydration is a dehydration operation after the temperature in the laundry holding apparatus 1100 or the temperature of the first airflow outlet reaches a sixth temperature threshold. The second heating power may be less than the first heating power, and may be set as, for example, 1000W, 1100W or other power values. The second heating power may be equal to the first heating power, and may be set as, for example, 1200W and 1600W. For example, for both the second heating power and the first heating power, the temperature is raised at full power until reaching a certain temperature, and then the heater 2500 reduces the power.

In an embodiment, when the temperature in the laundry holding apparatus 1100 or the temperature near the first airflow outlet reaches the sixth temperature threshold, the heater 2500 is controlled to run at lower third heating power, a control motor of the laundry holding apparatus 1100 is controlled to run at the second operation power (the second operation power is greater than the first operation power), and the third heating power is less than the second heating power. The sixth temperature threshold may be set to 45°C±5°C.

In the present embodiment, on one hand, when the temperature in the laundry holding apparatus 1100 or the temperature near the first airflow outlet reaches the sixth temperature threshold, the efficiency of the thermal dehydration is higher; on the other hand, since the second operation power is higher, properly reducing the heating power (the third heating power is less than the second heating power) can ensure the overall running power of the laundry holding apparatus and prolong a service life of the laundry holding apparatus.

In an embodiment, the heater 2500 is controlled to run at fourth heating power after the second operation power running stage of the second dehydration is completed. The fourth heating power is greater than the third heating power. In the present embodiment, the fourth heating power may be the full power of the heater 2500, and when the heater 2500 runs at larger heating power, the time of the preheating stage in the drying operation can be shortened.

In an embodiment, before the heater 2500 runs, the regenerating fan 2400 and/or the driving part 2300 for the moisture adsorption and desorption rotary disk are at least controlled to be turned on. Alternatively, before the power of the heater 2500 reaches first threshold power, the regenerating fan 2400 and/or the driving part 2300 for the moisture adsorption and desorption rotary disk are at least controlled to be started. Alternatively, before the heater 2500 is turned on for a first preset time, the regenerating fan 2400 and/or the driving part 2300 for the moisture adsorption and desorption rotary disk are at least controlled to be started. Alternatively, before a rotary disk temperature of the moisture adsorption and desorption rotary disk 2201 reaches a third temperature threshold, the regenerating fan 2400 and/or the driving part 2300 for the moisture adsorption and desorption rotary disk are at least controlled to be started. The above first threshold power may be set between 400W-800W. The first threshold power is less than or equal to the lower power at which the heater 2500 works normally (as in the preceding embodiment, the heater 2500 runs within the preset heating power range of 400W to 1600W in a fluctuating manner; here the first threshold power may be set to be less than or equal to or the minimum power value within the preset heating power range). The first preset time is less than or equal to the time for the heating power to reach the first threshold power. For example, the first preset time may be set between 10 and 20 minutes, such as 15 minutes. The third temperature threshold is less than or equal to 180°C. The third temperature threshold is less than or equal to 180°C.

In the present embodiment, three types of moments for turning on the regenerating fan 2400 and/or the driving part 2300 for the moisture adsorption and desorption rotary disk are provided, and judgment methods of these three types of turning-on moments may be applied to different laundry treatment devices. Specifically, before the heater 2500 runs, the regenerating fan 2400 and/or the driving part 2300 for the moisture adsorption and desorption rotary disk are at least controlled to be turned on, which can prevent the heater 2500 from heating a fixed position of the moisture adsorption and desorption rotary disk 2201, reduce the damage to the moisture adsorption and desorption rotary disk 2201, and prolong the service life of the moisture adsorption and desorption rotary disk 2201. Before the power of the heater 2500 reaches the first threshold power or the heater 2500 is turned on for the first preset time, the regenerating fan 2400 and/or the driving part 2300 for the moisture adsorption and desorption rotary disk are controlled to be started; and before the rotary disk temperature of the moisture adsorption and desorption rotary disk 2201 reaches the third temperature threshold, the regenerating fan 2400 and/or the driving part 2300 for the moisture adsorption and desorption rotary disk are controlled to be started, which can ensure that the moisture adsorption and desorption rotary disk 2201 has a certain temperature, thereby improving a preheating effect of the preheating stage of the drying operation.

In a set of embodiments, the present application also provides a control method of a laundry treatment device, and the running of the laundry treatment device includes a drying operation. The drying operation includes a heating and drying stage and a cooling stage.

The running in the cooling stage at least includes: S1, controlling the heater 2500 to stop heating, without stopping the running of the circulating fan 2100 and/or the regenerating fan 2400 and/or the driving part 2300 for the moisture adsorption and desorption rotary disk; S2, detecting the temperature near the first airflow inlet and the temperature near the first airflow outlet; and S3: when the temperature near the first airflow inlet is less than the fourth temperature threshold, and/or the temperature near the first airflow outlet is less than the fifth temperature threshold, controlling the circulating fan 2100, the regenerating fan 2400, and the driving part 2300 for the moisture adsorption and desorption rotary disk to stop running.

In the present embodiment, when the temperature near the first airflow inlet is less than the fourth temperature threshold and/or the temperature near the first airflow outlet is less than the fifth temperature threshold, it is judged that the cooling stage is completed, and the circulating fan 2100, the regenerating fan 2400 and the driving part 2300 for the moisture adsorption and desorption rotary disk are controlled to stop running. The specific fourth temperature threshold may be set between 50 and 65°C, such as 55°C, 58°C, 60°C, 63°C and 65°C. The fifth temperature threshold is normal temperature, and may also change according to the change of seasons. For example, the fifth temperature threshold is set between 5 and 15°C in spring and autumn, between 15 and 35°C in summer and between 0 and 10°C in winter.

In the present embodiment, when the temperature near the first airflow inlet is less than the fourth temperature threshold, or the temperature near the first airflow outlet is less than the fifth temperature threshold, or the temperature near the first airflow inlet and the temperature near the first airflow outlet reach the corresponding threshold temperatures at the same time, it is judged that the cooling stage is completed, and the circulating fan 2100, the regenerating fan 2400 and the driving part 2300 for the moisture adsorption and desorption rotary disk are controlled to stop running.

In an embodiment, in step S1, the power of the circulating fan 2100 is increased to third circulating power, and/or the power of the regenerating fan 2400 is increased to third regenerating power. In the present embodiment, both the third circulating power and the third regenerating power may be the maximum power. For example, the third circulating power may be set in the range of 80W to 90W. The third regenerating power may be set in the range of 20W to 30W. In an embodiment, the power of the circulating fan 2100 is increased to 90W for running, and/or the power of the regenerating fan 2400 is increased to 30W for running.

In a set of embodiments, the present application also provides a control method of a laundry treatment device, and the running of the laundry treatment device includes a laundry washing operation and a drying operation.

Before the laundry washing operation ends, the heater 2500 is controlled to be turned on for running. Alternatively, before the drying operation starts, the heater 2500 is controlled to be turned on. In at least one stage after the laundry washing operation ends, the heater 2500 is controlled to run within the preset heating power range in a fluctuating manner.

In the present embodiment, by turning on the heater 2500 before the laundry washing operation ends, the laundry holding apparatus 1100 may be preheated in advance, and the time of the subsequent drying operation may be shortened, especially the time of the preheating stage of the drying operation. In at least one stage after the laundry washing operation (such as the heating and drying stage of the drying operation) ends, the heater 2500 is controlled to run within the preset heating power range (such as the preset heating power range of 400W to 1600W) in a fluctuating manner. In other stages after the laundry washing operation (such as the preheating stage of the drying operation) ends, the device mainly runs at stable heating power. When it is detected that other components have abnormal temperatures or reach certain temperature thresholds, the heater 2500 is controlled to reduce the heating power.

In an embodiment, before the heater 2500 is started for running, the regenerating fan 2400 and/or the driving part 2300 for the moisture adsorption and desorption rotary disk are controlled to be turned on, which can prevent the heater 2500 from continuously heating a certain part of the moisture adsorption and desorption rotary disk 2201.

In an embodiment, before the heater 2500 runs, the regenerating fan 2400 and/or the driving part 2300 for the moisture adsorption and desorption rotary disk are at least controlled to be turned on. Alternatively, before the power of the heater 2500 reaches the first threshold power, the regenerating fan 2400 and/or the driving part 2300 for the moisture adsorption and desorption rotary disk are at least controlled to be turned on. Alternatively, before the heater 2500 is turned on for the first preset time, the regenerating fan 2400 and/or the driving part 2300 for the moisture adsorption and desorption rotary disk are at least controlled to be started. Alternatively, before the rotary disk temperature of the moisture adsorption and desorption rotary disk 2201 reaches the third temperature threshold, the regenerating fan 2400 and/or the driving part 2300 for the moisture adsorption and desorption rotary disk are at least controlled to be started.

In the present embodiment, four types of moments for turning on the regenerating fan 2400 and/or the driving part 2300 for the moisture adsorption and desorption rotary disk are provided, and the judgment methods of these four types of turning-on moments may be applied to different laundry treatment devices or different laundry treatment processes of the same laundry treatment device, for details of which the descriptions in the above embodiments may be referred to.

In a set of embodiments, the present application also provides a control method of a laundry treatment device, and the running of the laundry treatment device includes a drying operation. The drying operation includes a preheating stage, a heating and drying stage and a cooling stage.

The running of the preheating stage at least includes:
S10, turning on the driving part 2300 for the moisture adsorption and desorption rotary disk, and rotating the moisture adsorption and desorption rotary disk 2201 at a first rotary speed in the preheating stage;
S11, turning on the heater 2500 to heat the moisture adsorption and desorption rotary disk 2201 or the moisture desorption space; and
S12, before the power of the heater 2500 reaches the first threshold power, or before the heater 2500 is turned on for the first preset time, or before the temperature of the moisture desorption space reaches the third temperature threshold, controlling the regenerating fan 2400 to be turned on.

In the present embodiment, in the preheating stage of the drying operation, the moisture adsorption and desorption rotary disk 2201 is turned on first, then the heater 2500 is turned on, and finally the regenerating fan 2400 is turned on. The moisture adsorption and desorption rotary disk 2201 is turned on first, which can avoid that one position of the moisture adsorption and desorption rotary disk 2201 is fixedly heated. Before the three situations in S12 occur, the regenerating fan 2400 is turned on, so that on one hand, the heat generated by the heater 2500 can be impelled to be fully circulated into the laundry holding apparatus 1100 to heat the clothes; and on the other hand, the actual power of the device can be reduced and energy is saved.

In a set of embodiments, the present application also provides a control method of a laundry treatment device, and the running of the laundry treatment device includes a drying operation.

The drying operation includes a preheating stage, a heating and drying stage and a cooling stage.

S20, the regenerating fan 2400 is turned on. S21, the heater 2500 is turned on to heat the moisture adsorption and desorption rotary disk 2201 or the moisture desorption space. S22, before the power of the heater 2500 reaches the first threshold power, or before the heater 2500 is turned on for the first preset time, or before the temperature of the moisture desorption space reaches the third temperature threshold, the moisture adsorption and desorption rotary disk 2201 is controlled to be turned on.

**In** the present embodiment, in the preheating stage of the drying operation, the regenerating fan 2400 is turned on first, then the heater 2500 is turned on, and finally the moisture adsorption and desorption rotary disk 2201 is turned on. The regenerating fan 2400 is turned on first, so that the regenerating airflow can be formed in the moisture desorption space of the moisture adsorption and desorption rotary disk 2201. Then the heater 2500 is turned on, so that the heat generated by the heater 2500 can be circulated by using the regenerating airflow, so as to avoid that one position of the moisture adsorption and desorption rotary disk 2201 is fixedly heated.

**In** a set of embodiments, the present application also provides a control method of a laundry treatment device, and the running of the laundry treatment device includes a drying operation. The drying operation includes a preheating stage, a heating and drying stage and a cooling stage.

S30, the heater 2500 is turned on to heat the moisture adsorption and desorption rotary disk 2201. S31, before the power of the heater 2500 reaches the first threshold power, or before the heater 2500 is turned on for the first preset time, or before the temperature of the moisture desorption space reaches the third temperature threshold, the moisture adsorption and desorption rotary disk 2201 is controlled to be turned on, and the regenerating fan 2400 is controlled to be turned on.

**In** the present embodiment, in the preheating stage of the drying operation, the heater 2500 is turned on first, then the moisture adsorption and desorption rotary disk 2201 is turned on, and finally the regenerating fan 2400 is turned on. The heater 2500 is turned on first, so that the moisture adsorption and desorption rotary disk 2201 can be turned on before any of the three situations in S31 occurs (before the first situation occurs).

**In** the above three sets of embodiments, the third temperature threshold may be set between 160-180°C, such as 162°C, 167°C, 172°C, 175°C and 180°C. The first rotary speed is between 8-15rpm. In the heating and drying stage, the rotary speed of the moisture adsorption and desorption rotary disk 2201 is reduced. In an embodiment, the moisture adsorption and desorption rotary disk 2201 rotates at a second rotary speed. The second rotary speed is between 2-8rpm, and the second rotary speed may be set to 4rpm, 5rpm, 6rpm or 7rpm in different embodiments.

**In** a set of embodiments, the present application provides a control method of a laundry treatment device, and the running of the laundry treatment device includes a drying operation. The drying operation includes a preheating stage, a heating and drying stage and a cooling stage.

In the preheating stage, the heater 2500 is turned on. Specifically, the heater 2500 runs at the maximum power when it is just started, and when it is detected that the temperature in the laundry holding apparatus 1100 or the temperature near the first airflow outlet reaches the sixth temperature threshold (45°C), the heater 2500 is controlled to reduce the heating power. In this way, on one hand, the system temperature of the drying apparatus 2000 can be properly adjusted, and on the other hand, the moisture adsorption and desorption rotary disk 2201 can be protected to avoid dry heating of a certain position of the moisture adsorption and desorption rotary disk 2201 caused by high temperature.

In the heating and drying stage, the heater 2500 runs within the preset heating power range (400W to 1600W) in a fluctuating manner. In the preheating stage, the heating power of the heater 2500 is less than or equal to the maximum power value in the preset heating power range. The preset heating power range may be set between 600W and 1400W. The heater 2500 may run in a fluctuating manner in the form of different waveforms within the preset heating power range. At the time of running in a fluctuating manner for heating, if it is detected that the temperature in the laundry holding apparatus 1100 or the temperature near the first airflow outlet reaches the sixth temperature threshold, the running will also be performed at lower power. In the cooling stage, the heater 2500 stops running.

In the present embodiment, different running power of the heater 2500 at different stages of the drying operation is provided to ensure that the drying operation can achieve the highest drying efficiency in the shortest time.

In an embodiment, in the preheating stage, the regenerating fan 2400 runs at first regenerating power. In the heating and drying stage, the regenerating fan 2400 runs at second regenerating power. In the cooling stage, the regenerating fan 2400 runs at the third regenerating power. The first regenerating power is less than or equal to the second regenerating power, and the first regenerating power may be 0. The third regenerating power is greater than the first regenerating power, and the third regenerating power is greater than or equal to the second regenerating power.

In the present embodiment, the second regenerating power may be fixed power or variable power, and the magnitude of the second regenerating power may change in positive correlation with the power fluctuation of the heater 2500. The change in positive correlation may be interpreted as that the heating power and regenerating power are positively correlated in the change trend of increasing and decreasing, and the change time may have a certain delay. For example, after the heating power is increased for a time period, the regenerating power is increased. Different regenerating power is designed for the regenerating fan 2400 in different stages, in order to improve the drying efficiency of the laundry treatment device too.

In an embodiment, in the preheating stage, the driving part 2300 for the moisture adsorption and desorption rotary disk rotates at the first rotary speed. In the heating and drying stage, the driving part 2300 for the moisture adsorption and desorption rotary disk rotates at the second rotary speed. In the cooling stage, the driving part 2300 for the moisture adsorption and desorption rotary disk rotates at a third rotary speed. The first rotary speed, the second rotary speed and the third rotary speed are all equal. Alternatively, both the first rotary speed and the third rotary speed are greater than or equal to the second rotary speed. The second rotary speed may be set between 2-10rpm, and in an embodiment, set between 4-6rpm.

In the present embodiment, the rotary speeds of the driving part 2300 for the moisture adsorption and desorption rotary disk are set to be equal, or the first rotary speed and the third rotary speed are both greater than or equal to the second rotary speed, which can ensure that the moisture adsorption and desorption rotary disk 2201 rotates at a proper rotary speed, and the dehumidification efficiency of the moisture adsorption and desorption rotary disk 2201 is improved.

In an embodiment, in the preheating stage, the circulating fan 2100 runs at first circulating power. In the heating and drying stage, the circulating fan 2100 runs at second circulating power. In the cooling stage, the circulating fan 2100 runs at the third circulating power. The first circulating power and the third circulating power are greater than or equal to the second circulating power. The second circulating power may be fixed power or dynamically changing power, and the magnitude of the second circulating power may be matched with the power change of the heater 2500, that is, may change in positive correlation with the change of the heating power of the heater 2500.

In the present embodiment, it is ensured that the circulating fan 2100 has the heating power matched with the heater 2500 and the rotary speed matched with the driving part 2300 for the moisture adsorption and desorption rotary disk in the heating and drying stage, so that the drying efficiency of the drying apparatus 2000 can be improved.

In an embodiment, the drying apparatus 2000 further includes a condenser 2600, which is arranged at the other side of the moisture desorption space and used for condensing the airflow flowing out of the moisture desorption space. The condenser 2600 is a water-cooling condenser. At least in one stage of the working process of the laundry treatment device, the water flow rate is between 0.2 and 0.4L/min. In an embodiment, the water flow rate is set to 0.36L/min in the heating and drying stage and the cooling stage of the drying operation.

In a set of embodiments, the present application provides a control method of a laundry treatment device. The laundry treatment device includes a laundry holding apparatus 1100 and a drying apparatus 2000. The running of the laundry treatment device includes a drying operation. The drying operation includes a preheating stage, a heating and drying stage and a cooling stage.

At the beginning of the preheating stage, the heater 2500 is turned on to run, and when it is detected that the temperature in the laundry holding apparatus 1100 or the temperature near the first airflow outlet reaches the sixth temperature threshold (which may be set to 45°C), the heater 2500 is controlled to run at reduced heating power. The regenerating fan 2400 runs at the first regenerating power. The driving part 2300 for the moisture adsorption and desorption rotary disk rotates at the first rotary speed. The circulating fan 2100 runs at the first circulating power.

In the heating and drying stage, the heater 2500 runs within the preset heating power range in a fluctuating manner. The regenerating fan 2400 runs at the second regenerating power or at power which changes in positive correlation with the change of the heating power of the heater 2500, and the second regenerating power is greater than the first regenerating power. The driving part 2300 for the moisture adsorption and desorption rotary disk rotates at the second rotary speed, and the second rotary speed is less than or equal to the first rotary speed. The circulating fan 2100 runs at the second circulating power or at power which changes in positive correlation with the change of the heating power of the heater 2500, and the second circulating power is less than or equal to the first circulating power.

In the cooling stage, the heater 2500 stops running. The regenerating fan 2400 runs at the third regenerating power, the third regenerating power is greater than the second regenerating power, and the third regenerating power is greater than the first regenerating power. The driving part 2300 for the moisture adsorption and desorption rotary disk rotates at the third rotary speed, and the third rotary speed is greater than or equal to the second rotary speed. The circulating fan 2100 runs at the third circulating power, and the third circulating power is greater than the second circulating power.

In the present embodiment, the running control strategies of various components of the drying apparatus 2000 in the whole drying operation are provided to maximize the drying efficiency of the drying apparatus 2000. In the present embodiment, for specific numerical values of various parameters, reference may be made to the descriptions in any of the above embodiments.

In a specific embodiment, please refer to Fig. 11, in the preheating stage, the heater runs at the heating power of 1400W for a first time period. When the temperature in the laundry holding apparatus 1100 or the temperature near the first air outlet reaches the sixth temperature threshold (45°C±5°C), the heater is controlled to reduce the heating power and run at the heating power of 600W. In the heating and drying stage, the heater runs with the heating power of 600W to 1400W in a fluctuating manner. In the cooling stage, the heater stops running (the running power is 0).

In the first time period of the preheating stage, the inner drum driving motor runs at the rotary speed of 40 to 100rpm. When the heating power of the heater 2500 is reduced (when the temperature in the laundry holding apparatus 1100 or the temperature near the first air outlet reaches the sixth temperature threshold 45°C±5°C), the inner drum driving motor runs at an increased rotary speed, and the highest driving rotary speed of the inner drum driving motor may reach 1400rpm (the process of the inner drum driving motor running at the high rotary speed is the second dehydration process). In the heating and drying stage and the cooling stage, the inner drum driving motor runs at the rotary speed of 40 to100rpm.

In the preheating stage, the heating and drying stage and the cooling stage, the driving part 2300 for the moisture adsorption and desorption rotary disk drives the moisture adsorption and desorption rotary disk 2201 to run at the rotary speed of 2-10rpm.

In the preheating stage and the heating and drying stage, the running power of the circulating fan may be set in the range of 30 to 90W, so that the rotary speed of the circulating fan is between 3800rpm and 4000rpm. In the cooling stage, the rotary speed of the circulating fan is between 4000rpm and 5600rpm.

In the preheating stage and the heating and drying stage, the running power of the regenerating fan may be set in the range of 10 to 30W, so that the rotary speed of the regenerating fan is between 3700rpm and 3900rpm. In the cooling stage, the rotary speed of the regenerating fan is between 3900rpm and 4100rpm.

In the above specific embodiment, the most important heating and drying stage in the drying operation may take up 100 to110 minutes, which shortens the drying time and improves the drying efficiency.

In a set of embodiments, the present application provides a laundry treatment device, which includes a laundry holding apparatus 1100 and a drying apparatus 2000. The drying apparatus 2000 includes a shell, a moisture adsorption and desorption rotary disk 2201, a driving part 2300 for the moisture adsorption and desorption rotary disk, a circulating fan 2100, a regenerating fan 2400, a heater 2500, a condenser 1600, a memory and a processor.

The circulating fan 2100, the regenerating fan 2400, the moisture adsorption and desorption rotary disk 2201, the heater 2500, the condenser 2600, the memory and the processor are in communication connections with each other, the memory has computer instructions stored therein, and the processor executes the control method of a laundry treatment device in any one of the above embodiments by executing the computer instructions.

In a set of embodiments, the application provides a computer-readable storage medium, an application program is stored on the storage medium, and the application program, when executed by a processor, implements the control method of a laundry treatment device in any one of the above embodiments.

In any set/whichever/any one of embodiments mentioned above of the present application, one/more involved features may be combined with each other to improve the drying efficiency of the drying apparatus.

The foregoing is merely preferred embodiments of the present application, and not used to limit the present application. For those skilled in the art, the present application may have various modifications and variations. Any modification, equivalent substitution, improvement and the like made within the spirit and principles of the present application shall be included in the protection scope of the present application. It should be noted that similar symbols and letters indicate similar items in the following drawings. Therefore, once certain one item is defined in one drawing, it does not need to be further defined and explained in the subsequent drawings.

The foregoing is only specific embodiments of the present application, but the protection scope of the present application is not limited thereto. Changes or substitutions readily conceivable by those skilled in the art within the technical scope disclosed in the present application should be covered in the protection scope of the present application. Therefore, the protection scope of the present application should be based on the protection scope of the claims.

## Claims

1. A method for controlling a laundry treatment device, the laundry treatment device at least comprising a laundry holding apparatus and a drying apparatus,
wherein the drying apparatus comprises:
a moisture adsorption and desorption rotary disk;
a shell accommodating the moisture adsorption and desorption rotary disk, wherein an internal space of the shell is at least divided into a moisture adsorption space and a moisture desorption space; and
a heater covering at least part of the moisture desorption space and configured to heat the moisture desorption space or at least part of the moisture adsorption and desorption rotary disk located in the moisture desorption space;
wherein the laundry holding apparatus at least has a first airflow inlet and a first airflow outlet, the first airflow inlet is communicated with the drying apparatus through an air inlet duct, and the first airflow outlet is communicated with the drying apparatus through an air outlet duct; and
wherein a running process of the laundry treatment device comprises a drying operation; when the heater in the drying apparatus is in operation, detecting a temperature and/or humidity near the first airflow outlet; and
when a temperature change rate near the first airflow outlet is greater than a first threshold for the temperature change rate, and/or when a humidity change rate near the first airflow outlet is less than a first threshold for the humidity change rate, turning off the heater in the drying apparatus.

2. The method for controlling the laundry treatment device according to claim 1, wherein the drying apparatus further comprises a driving part for the moisture adsorption and desorption rotary disk, and keeping the driving part for the moisture adsorption and desorption rotary disk running for a first time period after the heater in the drying apparatus is turned off.

3. The method for controlling the laundry treatment device according to claim 2, wherein the drying apparatus further comprises at least a circulating fan and a regenerating fan, wherein the circulating fan is configured to form a circulating airflow passing through the laundry holding apparatus and the moisture adsorption space, and the regenerating fan is configured to form a regenerating airflow passing through the moisture desorption space; and
keeping running of the circulating fan, and keeping running of the regenerating fan at a higher power when a heating and drying stage is completed.

4. The method for controlling the laundry treatment device according to claim 1, wherein
the temperature change rate = (a currently collected temperature -a previously collected temperature) / a time difference between two temperature collections; and
the humidity change rate = (a currently collected humidity - a previously collected humidity) / a time difference between two humidity collections.

5. The method for controlling the laundry treatment device according to any one of claims 1 to 4, wherein when a temperature near the first airflow outlet is greater than or equal to a first abnormal temperature value, sending an alarm signal indicating an abnormality of the drying operation.

6. The method for controlling the laundry treatment device according to claim 1, wherein the laundry treatment device further comprises a condenser configured to condense an airflow flowing out of the moisture desorption space;
the condenser has a second air inlet and a second air outlet, and the airflow flowing out of the moisture desorption space enters the condenser through the second air inlet and enters the heater through the second air outlet after being condensed by the condenser; and
the drying operation further comprises:
detecting a temperature near the second air inlet, and when the temperature near the second air inlet reaches a first temperature threshold, turning off the heater in the drying apparatus; and
when the temperature near the second air inlet is greater than or equal to a second abnormal temperature value, sending an alarm signal indicating an abnormality of the drying operation.

7. The method for controlling the laundry treatment device according to claim 6, wherein the drying operation further comprises:
detecting a temperature near the second air outlet, and when the temperature near the second air outlet reaches a second temperature threshold, turning off the heater in the drying apparatus; and
when the temperature near the second air outlet is greater than or equal to a third abnormal temperature value, sending the alarm signal indicating the abnormality of the drying operation.

8. The method for controlling the laundry treatment device according to claim 1, wherein during the drying operation:
when a temperature near the first airflow inlet is less than a preset minimum temperature near the first airflow inlet, increasing a running power of the heater; and
when the temperature near the first airflow inlet is greater than or equal to a preset maximum temperature near the first airflow inlet, reducing the running power of the heater.

9. The method for controlling the laundry treatment device according to claim 1, wherein a heating and drying stage of the drying operation comprises:
controlling the heater to run within a preset heating power range in a fluctuating manner, so as to control a temperature near the first airflow inlet to be within a preset temperature range.

10. The method for controlling the laundry treatment device according to claim 9, wherein the preset heating power is a power between a first preset heating power and a second preset heating power, and the heater runs in a form of square waves between the first preset heating power and the second preset heating power in a fluctuating manner.

11. The method for controlling the laundry treatment device according to claim 10, wherein the first preset heating power is between 400W-800W, and the second preset heating power is between 1200W-1600W.

12. The method for controlling the laundry treatment device according to claim 3, further comprising:
controlling the heater to stop heating;
controlling to increase a power of the circulating fan and/or controlling to increase a power of the regenerating fan; and
when a temperature of the first airflow inlet is less than a fourth temperature threshold, and/or when a temperature near the first airflow outlet is less than a fifth temperature threshold, controlling the circulating fan and/or the regenerating fan to stop running.

13. The method for controlling the laundry treatment device according to claim 12, wherein the fourth temperature threshold is between 50°C and 65°C.

14. A laundry treatment device, comprising a laundry holding apparatus and a drying apparatus; wherein
the drying apparatus comprises:
a moisture adsorption and desorption rotary disk;
a shell accommodating the moisture adsorption and desorption rotary disk, wherein an internal space of the shell is at least divided into a moisture adsorption space and a moisture desorption space;
a driving part for the moisture adsorption and desorption rotary disk configured to drive the moisture adsorption and desorption rotary disk to rotate around a rotary shaft in the shell;
a circulating fan configured to form a circulating airflow passing between the laundry holding apparatus and the moisture adsorption space;
a regenerating fan configured to form a regenerating airflow passing through the moisture desorption space;
a heater covering at least part of the moisture desorption space and configured to heat the moisture desorption space or at least part of the moisture adsorption and desorption rotary disk entering the moisture desorption space;
a condenser arranged downstream of the moisture desorption space and configured to condense an airflow flowing out of the moisture desorption space; and
a memory and a processor, wherein the circulating fan, the regenerating fan, the moisture adsorption and desorption rotary disk, the heater, the condenser, the memory and the processor are in communication connections with each other, computer instructions are stored in the memory, and the processor performs the method for controlling the laundry treatment device according to any one of claims 1 to 13 by executing the computer instructions.

15. A computer-readable storage medium, having an application program stored thereon, which when executed by a processor, causes the method for controlling the laundry treatment device according to any one of claims 1 to 13 to be implemented.
